# EUROPÄISCHE PATENTSCHRIFT

(11) **EP 3 368 975 B1**
(45) Veröffentlichungstag und Bekanntmachung des Hinweises auf die Patenterteilung: **05.01.2022**
(21) Anmeldenummer: 16790566.0
(22) Anmeldetag: 28.10.2016
(51) Int. Cl.: G06F 9/448

(54) **VERFAHREN UND VORRICHTUNG ZUM BESCHLEUNIGTEN AUSFÜHREN VON APPLIKATIONEN**
METHOD AND DEVICE FOR THE ACCELERATED EXECUTION OF APPLICATIONS
PROCÉDÉ ET DISPOSITIF POUR L'EXÉCUTION ACCÉLÉRÉE D'APPLICATIONS

(30) Priorität: 29.10.2015 DE 102015118522
(43) Veröffentlichungstag der Anmeldung: 05.09.2018
(73) Patentinhaber: Dacs Laboratories GmbH, 40699 Erkrath (DE)
(72) Erfinder: BOECK, Sixten, 40237 Düsseldorf (DE)
(74) Vertreter: Cohausz & Florack
(86) Internationale Anmeldenummer: PCT/EP2016/076111
(87) Internationale Veröffentlichungsnummer: WO 2017/072312

(56) Entgegenhaltungen:
- US-A1- 2010 011 323
- David Chernicoff: "WindowsITPro - The Impact of Disk Fragmentation on Servers The Impact of Disk Fragmentation on Servers Testing Server Disk Defragmentation", , 1. Januar 2011 (2011-01-01), Seiten 1-9, XP055377002, Gefunden im Internet: URL:http://learn.condusiv.com/rs/condusivt echnologies/images/Impact_of_Fragmentation _on_Servers.pdf [gefunden am 2017-05-30]
- O&o Software Gmbh: "O&O Defrag 14 - User's guide", , 1. Januar 2011 (2011-01-01), Seiten 1-83, XP055377377, Gefunden im Internet: URL:http://www.oo-software.com/en/docs/use rsguide/ood14pro.pdf [gefunden am 2017-05-31]

## Beschreibung

### Gebiet der Erfindung

Die vorliegende Erfindung betrifft gemäß einem ersten Aspekt ein Verfahren zum Ausführen einer Applikation. Gemäß einem zweiten Aspekt betrifft die Erfindung ein Verfahren zum Senden von Datenteilen. Gemäß einem dritten Aspekt betrifft die Erfindung ein Verfahren zum Speichern von Datenteilen. Gemäß weiteren Aspekten betrifft die Erfindung zudem Vorrichtungen und Computerprogramme.

### Hintergrund der Erfindung

Eingangs genannte gattungsgemäße Verfahren, insbesondere Verfahren zum Ausführen einer Applikation sind aus dem aus dem Stand der Technik bekannt.

Während des Startvorgangs einer Applikation können viele Sekunden oder Minuten oder, falls die Applikation erst von einem entfernten Server über ein Netzwerk wie dem Internet heruntergeladen werden muss, sogar viele Stunden vergehen, bis die Applikation schließlich von einem Benutzer interaktiv eingesetzt werden kann. In der Regel möchte der Benutzer jedoch die gewählte Applikation möglichst sofort verwenden, das heißt, der Startvorgang soll möglichst kurz sein.

Hinzu kommt, dass in jüngster Zeit immer häufiger ausführbare Anwendungen übertragen werden müssen, da diese nicht mehr auf einem Datenträger, sondern über ein Netzwerk, beispielsweise das Internet verteilt werden. Um auch in diesem Fall eine kurze Zeit bis zum Starten der Applikation zu erreichen, wurden verschiedene Ansätze verfolgt.

Als ein Beispiel kann das sogenannte "Video Streaming" verwendet werden, bei dem die Anwendung auf einem Server ausgeführt wird und nur ein Audio- und Video-Stream an einen Client übertragen wird, auf dem die Applikation genutzt werden soll.

Nachteilig hieran ist allerdings, dass die Latenzzeit unter Umständen zu groß ist, um eine zufriedenstellende und insbesondere flüssige Benutzung der Applikation auf dem vom Server entfernt liegenden Client zu ermöglichen. Beispielsweise kann die Bandbreite nicht ausreichend sein oder es können Latenzzeiten von bis zu mehreren hundert Millisekunden, insbesondere bei Übertragungen über das Internet, auftreten. Zudem ist eine dauerhafte Übertragung von Daten in Form eines Audio- und/oder Video-Streams notwendig, sodass der Client dauerhaft online sein muss.

Um diesen Nachteilen zu begegnen, wird das sogenannte "Application-Streaming" verwendet, wodurch eine Anwendung bei Bedarf ("on-demand") einem Client von einem Server zur Verfügung gestellt wird. Die Anwendung wird jedoch nicht wie bei dem beschriebenen "Video Streaming" auf dem Server ausgeführt und dann nur Audio- und/oder Video-Daten an den Client übertragen, sondern die Anwendung selbst wird übertragen und durch den Client lokal ausgeführt. Dadurch, dass die Anwendung lokal auf dem Client ausgeführt wird, muss die Performanz des Servers nicht zum Ausführen der Anwendung ausgelegt werden. Zudem sind hohe Latenzzeiten unproblematischer oder sogar irrelevant.

Muss die Applikation also erst von einem entfernten Server über ein Netzwerk, wie etwa das Internet, heruntergeladen werden, können sogar viele Stunden vergehen, bis die Applikation schließlich von einem Benutzer interaktiv eingesetzt werden kann.

Um insbesondere diesem Nachteil zu begegnen, ist es aus dem Stand der Technik beispielsweise bekannt, die zum Herunterladen und Installieren der Applikation benötigte Zeit zu verkürzen, sodass im Endeffekt die Zeit bis zum Starten der Applikation verringert wird. Hierzu können etwa Blöcke eines Softwaretitels heruntergeladen werden bis eine ausführbare Schwelle erreicht ist. Dann kann der Softwaretitel ausgeführt werden und das Herunterladen von weiteren Blöcken des Softwaretitels kann fortgesetzt werden, während der Softwaretitel ausgeführt wird.

Hierdurch kann zwar die Zeit vor dem und bis zum Starten einer Applikation verringert werden, insbesondere wenn die Applikation von einem entfernten Server heruntergeladen werden muss. Im Endeffekt wird die Applikation nach dem (teilweisen) Herunterladen aber dann wie üblich auf einem lokalen Speicher des Benutzers, beispielsweise seiner Festplatte, gespeichert. Insofern würde der eigentliche Startvorgang der Applikation dann im besten Fall so schnell erfolgen wie bei einer lokal installierten Applikation. Das heißt, auch in diesem Fall benötigt der Start der Applikation, obwohl die notwendigen Daten schon lokal vorhanden sind, wiederum Sekunden oder Minuten, bis der Benutzer die Applikation interaktiv nutzen kann.

Wie jedoch eingangs ausgeführt, besteht ein Interesse daran, nicht nur die Zeit bis zum Starten der Applikation zu verringern, sondern auch das Ausführen selbst und insbesondere das Starten selbst zu beschleunigen. Im Falle von Computerspielen werden die Benutzer oder Spieler beim Starten des Computerspiels beispielsweise häufig durch Videosequenzen abgelenkt, bis das Computerspiel endlich spielbar ist. Insofern ist eine Verkürzung auch des Applikationsstarts selbst erstrebenswert. Dies gilt gleichermaßen für andere Applikationen. Weiterhin gilt dies sowohl für Applikationen, welche dem Benutzer im Rahmen eines Application-Streaming zur Verfügung gestellt werden, als auch für Applikationen, welche dem Benutzer bereits lokal zu Verfügung stehen.

In der US 2010/011323 A1 wird ein Verfahren zur Defragmentierung beschrieben. Durch eine Defragmentierung werden Dateien physikalisch reorganisiert, sodass Softwareteile derart gespeichert werden, dass ein physikalisches Zusammenführen von logisch zusammengehörenden Datenteilen erfolgt. Welche Daten dabei in welchen Dateien zusammengefasst sind, sagt aber nichts darüber aus, zu welchem Zeitpunkt welche Datenteile einer Datei beim Starten einer Applikation benötigt werden.

### Beschreibung einiger beispielhafter Ausgestaltungen der vorliegenden Erfindung

Eine Aufgabe der Erfindung ist es deshalb, gattungsgemäße Verfahren, Vorrichtungen und Computerprogramme anzugeben, wobei ermöglicht werden soll, das Ausführen, insbesondere das Starten der Applikation zu beschleunigen.

Gemäß einem ersten Aspekt betrifft die Erfindung ein Verfahren zum Ausführen einer Applikation, durchgeführt von mindestens einer Vorrichtung, gemäß dem Anspruch 1.

Die Erfindung macht sich zunutze, dass, wenn Datenteile aus einem Datenspeicher bereitgestellt werden, die Datenteile in dem Datenspeicher in einer bestimmten Reihenfolge gespeichert sind, nämlich in einer Reihenfolge zumindest bereichsweise basierend auf einer zu erwartenden benötigten Reihenfolge. Hierdurch wird erreicht, dass benötigte Datenteile der Applikation regelmäßig schneller als gewöhnlich zur Verfügung stehen können und insbesondere der Vorgang des Applikationsstarts - unabhängig davon, ob das Programm bereits lokal installiert ist oder zunächst von einem entfernten Server heruntergeladen werden muss - drastisch beschleunigt werden kann. Es wird also insbesondere ein Verfahren zum beschleunigten Ausführen einer Applikation bereitgestellt.

Der Datenspeicher kann dabei beispielsweise von einer Festplatte, einer Solid State Disk (SSD), einem Arbeitsspeicher (RAM) oder einem externen Laufwerk zur Verfügung gestellt werden, um nur einige Beispiele zu nennen.

Wird eine Applikation hingegen in konventioneller Weise auf einem Datenspeicher (zum Beispiel einer Festplatte) gespeichert, so ist die Reihenfolge der einzelnen Datenteile auf dem Datenspeicher beispielsweise von der Dateizugehörigkeit oder der Ordnerstruktur abhängig. Hinzu kommt, dass die Datenteile oft in einer fragmentierten Form vorliegen, was das Ausführen der Applikation weiterhin verlangsamt. Die Fragmentierung ist vor allem auf das verwendete Dateisystem selbst zurückzuführen. Die meisten Dateisysteme sind so entwickelt, dass eine optimale Gesamtleistung erreicht werden kann, was dazu führt dass die zu einer Applikation gehörenden Datenteile im Laufe der Zeit in dem Datenspeicher fragmentiert werden.

Zwar können moderne Dateisysteme diesen Effekt im laufenden Betrieb minimieren, aber die Reihenfolge der Datenteile einzelner Dateien wird trotzdem nach wie vor auseinandergerissen. Unabhängig von den unterschiedlichen physikalischen Zugriffsmechanismen verfügbarer Datenspeicher, das heißt egal ob es sich beispielsweise um eine Festplatte mit sich drehenden Spindeln, eine Solid State Disk (SSD) oder einen Arbeitsspeicher (RAM) handelt, ist der direkte Zugriff (auch "Random Access" oder Zugriff mittels gezielter Sprünge, sogenannter "seek operations", genannt) dann jedoch vergleichsweise langsam.

Die Erfindung ermöglicht es nun dadurch, dass die Datenteile in dem Datenspeicher in einer Reihenfolge zumindest bereichsweise basierend auf einer zu erwartenden benötigten Reihenfolge gespeichert sind, die Datenteile ähnlich einem kontinuierlichen Stream bei einem Streaming-Vorgang zur Verfügung zu stellen. Ist der Datenspeicher beispielsweise eine Festplatte mit einer rotierenden Spindel, werden in der Regel alle Datenteile gelesen, die sich auf derselben Spur befinden, wie ein angeforderter Datenteil, da diese ohnehin den Schreib-/Lesekopf passieren. Es entsteht also keine zusätzliche Verzögerung durch das Lesen weiterer Datenteile in derselben Spur. Sollten diese dann anschließend angefordert werden, stehen sie unmittelbar bereit. Insofern wird ein Vorausladen der Datenteile erreicht ("Data-Prefetching"). Ist der Datenspeicher beispielsweise ein Datenspeicher auf Festkörperbasis (beispielsweise SSD, RAM) wird in der Regel in einem Schritt eine gesamte Speicherseite ("memory page") gelesen anstatt nur der angeforderte Datenteil. Dadurch enthält ein Zwischenspeicher ("Cache") auch die benachbart gespeicherten Datenteile. Wird kurze Zeit später der nächste benötigte Datenteil angefordert, steht dieser bereits im Zwischenspeicher zur Verfügung. Auch in diesem Fall wird ein Vorausladen der Datenteile erreicht. Schließlich kann dieses Verfahren auch bei der Kommunikation über ein Netzwerk vorteilhaft sein, da bei größeren Entfernungen (mit vielen "Hops") die Paketumlaufzeit einige hundert Millisekunden betragen kann und das Anfordern einzelner Datenteile entsprechend lange dauern kann.

Eine Applikation kann insbesondere ein Computerprogramm sein, das genutzt wird, um eine nützliche oder gewünschte nicht systemtechnische Funktionalität zu bearbeiten, zu unterstützen oder bereitzustellen. Grundsätzlich ist denkbar, dass die Applikation der Bildbearbeitung, Videobearbeitung, Textverarbeitung, Tabellenkalkulation dienen kann und/oder bestimmte betriebliche Funktionen wie Finanzbuchhaltung, Kundenverwaltung etc. bereitstellen kann. Die Applikation wird zumindest teilweise im Userspace ausgeführt. Besonders bevorzugt ist oder umfasst die Applikation ein Computerspiel oder einen Teil hiervon. Das Verfahren kann auch den Schritt Ausführen der Applikation umfassen.

Zur weiteren Steigerung der Leistungsfähigkeit wird das Verfahren bevorzugt (zumindest teilweise) im Kernelspace durchgeführt.

Zum Ausführen der Applikation kann die Applikation beispielsweise eine oder mehrere ausführbare Dateien umfassen. Hierbei kann es sich beispielsweise um eine Binärdatei in Maschinensprache oder um eine Bytecode-Datei handeln, die direkt oder durch ein Laufzeitsystem ausgeführt werden kann, oder um eine Textdatei, die von einer Betriebssystem-Shell interpretiert werden kann. Die Datenteile können dann insbesondere Datenteile der ausführbaren Datei sein.

Unter den von zu der Ausführung der Applikation benötigten Datenteilen können insbesondere zwingend und/oder optional benötigte Datenteile verstanden werden.

Dass die Reihenfolge, in der die Datenteile in dem Datenspeicher gespeichert sind, auf einer zu erwartenden benötigten Reihenfolge basiert, bedeutet insbesondere, dass die (physische) Reihenfolge, in der die Datenteile in dem Datenspeicher gespeichert sind, aus der zu erwartenden benötigten (zeitlichen) Reihenfolge bestimmt wurde. Beispielsweise ist die Reihenfolge, in der die Datenteile in dem Datenspeicher gespeichert sind, die zu erwartende benötigte Reihenfolge. Dass dies zumindest bereichsweise erfolgt, bedeutet insbesondere, dass in dem Datenspeicher zur Ausführung der Applikation benötigte Datenteile teilweise auch klassisch, das heißt unabhängig von der zu erwartenden benötigten Reihenfolge gespeichert sein können.

Unter einer zu erwartenden benötigten Reihenfolge wird hierbei insbesondere verstanden, dass zu erwarten ist, dass die Applikation die Datenteile in der Reihenfolge benötigen wird. Mit anderen Worten sind die Datenteile insbesondere physisch in einer Reihenfolge gespeichert, welche den zeitlichen Bedarf der Datenteile für die Applikation wiedergibt. Die zu erwartende benötigte Reihenfolge kann insbesondere empirisch bestimmt werden. Insbesondere kann die zu erwartende benötige Reihenfolge, wie in Bezug auf den dritten Aspekt der Erfindung näher beschrieben wird, bestimmt werden.

Es müssen nicht zwangsweise alle für das Ausführen der Applikation benötigten Datenteile wie beschrieben gespeichert sein. Beispielsweise kann auch nur ein Teil der für das Ausführen der Applikation benötigten Datenteile in einer Reihenfolge zumindest bereichsweise basierend auf einer zu erwartenden benötigten Reihenfolge gespeichert sein.

Das Verfahren gemäß dem ersten Aspekt kann insbesondere von mindestens einer ersten Vorrichtung, die im Rahmen weiterer Aspekte näher beschrieben wird, durchgeführt werden.

Gemäß einer Ausgestaltung des Verfahrens des ersten Aspekts umfasst das Verfahren weiterhin:
- Anfordern von den zu der Ausführung der Applikation benötigten Datenteilen.

Das Anfordern kann beispielsweise durch die Applikation, durch ein Betriebssystem und/oder ein Dateisystem erfolgen. Beispielsweise benötigt die Applikation ein Datenteil zum Ausführen und gibt dies an das Dateisystem weiter. Das Anfordern kann beispielsweise dadurch erfolgen, dass eine (relative und/oder absolute) Adressierung übergeben wird, welche den Datenteil in dem Datenspeicher eindeutig identifiziert. Die Adressierung kann beispielsweise eine Position des Datenteils im Datenspeicher (beispielsweise in Form einer Speicheradresse oder eines Speicheroffsetwerts) benennen. Beispielsweise kann die Adressierung einen mehrere Datenteile umfassenden Bereich im Datenspeicher benennen. Auf Basis der Adressierung wird dann (zumindest) der benötigte Datenteil gelesen und bereitgestellt, beispielsweise an die Applikation, das Dateisystem und/oder das Betriebssystem zurückgegeben. Wie eingangs ausgeführt, wird in der Regel nicht nur der angeforderte Datenteil sondern es werden auch weitere, physikalisch benachbarte Datenteile gelesen. Im Optimalfall muss der benötigte Datenteil dann gar nicht mehr aus dem Datenspeicher gelesen werden, sondern wurde bereits aufgrund eines vorherigen Anforderns eines anderen Datenteils aus dem Datenspeicher gelesen und steht somit beispielsweise bereits in einem schnelleren Zwischenspeicher zur Verfügung. Somit kann ein Bereitstellen des Datenteils auf eine Anforderung hin mit dem beschriebenen Verfahren deutlich schneller erfolgen.

Gemäß einer Ausgestaltung des Verfahrens des ersten Aspekts umfasst das Verfahren weiterhin:
- Abbilden einer für das Anfordern von den zu der Ausführung der Applikation benötigten Datenteilen verwendeten Adressierung auf die Reihenfolge der in dem Datenspeicher gespeicherten Datenteile.

Durch ein Abbilden der für das Anfordern verwendeten Adressierung kann die Adressierung (beispielsweise auf Dateisystemebene) wie gewohnt erfolgen. Das heißt, die benötigten Datenteile können mittels der ursprünglichen Adressierung, wie sie etwa nach einer gewöhnlichen Installation der Applikation erfolgen würde, angefordert werden. Insbesondere kann die für das Anfordern verwendete Adressierung eine erste Adressierung sein, welche auf eine zweite Adressierung abgebildet wird ("Mapping"). Beispielsweise wird eine angeforderte Speicheradresse oder ein erster Speicheradressenbereich auf eine zweite Speicheradresse oder einen zweiten Speicheradressenbereich abgebildet. Beispielsweise wird eine erste Blocknummer oder ein erster Blocknummernbereich (oder mehrere Bereiche) auf eine zweite Blocknummer oder einen zweiten Blocknummernbereich (oder mehrere Bereiche) abgebildet. Die Abbildung ist bevorzugt eindeutig, insbesondere eineindeutig.

Gemäß einer Ausgestaltung des Verfahrens des ersten Aspekts erfolgt das Abbilden der verwendeten Adressierung unterhalb der Schicht des Dateisystems.

Im Allgemeinen stellt das Dateisystem eine bestimmte Schicht des Betriebssystems dar. Die Schichten darüber (etwa weitere Schichten des Betriebssystems oder Applikationen) können auf Dateien zugreifen. Durch das Dateisystem werden diese abstrakten Angaben in der Regel in eine Adressierung (beispielsweise eine Blocknummer, Spur, Sektor oder dergleichen) umgesetzt. In der Schicht darunter kann der Dateisystemtreiber dazu beispielsweise mit einem zuständigen Gerätetreiber kommunizieren.

Dadurch, dass nun das Abbilden der verwendeten Adressierung unterhalb der Schicht des Dateisystems erfolgt, kann das Abbilden äußerst performant durchgeführt werden. Werden die benötigten Datenteile beispielsweise von der Schicht des Dateisystems (oder einer darüber liegenden Schicht) angefordert kann das Dateisystem die Datenteile wie gewohnt adressieren, sodass auf Anpassungen auf der Ebene des Dateisystems oder darüber verzichtet werden kann. Beispielsweise erfolgt das Abbilden durch einen Gerätetreiber. Das Abbilden erfolgt also bevorzugt in einer mit Gerätetreibern assoziierten Schicht.

Auch das Bereitstellen von den zu der Ausführung der Applikation benötigten Datenteilen kann also insbesondere aus einer mit Gerätetreibern assoziierte Schicht an eine darüber liegende Schicht erfolgen.

Gemäß einer Ausgestaltung des Verfahrens des ersten Aspekts umfasst das Verfahren weiterhin:
- Empfangen von den zu der Ausführung der Applikation benötigten Datenteilen.

Es ist möglich, dass die zu der Ausführung der Applikation benötigten Datenteile beim Ausführen der Applikation noch nicht oder zumindest nur teilweise in dem Datenspeicher gespeichert sind. Dann können die restlichen Datenteile vollständig oder teilweise empfangen werden. Die Datenteile können beispielsweise von einem anderen lokalen oder entfernten Datenspeicher empfangen werden. Beispielweise werden die Datenteile über ein Netzwerk empfangen, beispielsweise über das Internet. Bevorzugt werden die Datenteile von einem entfernten Server über das Internet empfangen.

Wird beispielsweise festgestellt, dass angeforderte benötigte Datenteile nicht in dem Datenspeicher gespeichert sind, können diese Datenteile (beispielsweise bei dem entfernten Server) angefragt werden, um diese zu empfangen. Bevorzugt ist ein einzelnes Anfragen von benötigten und noch nicht in dem Datenspeicher gespeicherten Datenteilen jedoch nicht notwendig, da die Datenteile bevorzugt kontinuierlich empfangen werden. Das heißt, die Datenteile werden ähnlich einem Stream nach und nach empfangen, ohne dass einzelne Datenteile angefragt werden müssen. Dies beschleunigt das Ausführen der Applikation weiterhin. Wird beispielsweise andererseits festgestellt, dass benötigte Datenteile bereits in dem Datenspeicher gespeichert sind oder momentan nicht benötigt werden, kann das beschriebene kontinuierliche Empfangen auch (zumindest teilweise) für die bereits gespeicherten oder (momentan) nicht benötigten Datenteile übersprungen werden. Diese Datenteile können dann beispielsweise zu einem späteren Zeitpunkt empfangen werden.

Die Datenteile können bevorzugt (zumindest teilweise) in der Reihenfolge zumindest bereichsweise basierend auf der zu erwartenden benötigten Reihenfolge empfangen werden. Auf diese Weise werden die erwartungsgemäß zuerst benötigten Datenteile auch zuerst empfangen. Dies ist insbesondere dann vorteilhaft, wenn die benötigten Datenteile (insbesondere für den Start der Applikation benötigte Datenteile) erst von einem entfernten Server empfangen werden müssen.

Die zu der Ausführung der Applikation benötigten Datenteile können insbesondere von mindestens einer zweiten Vorrichtung, die im Rahmen weiterer Aspekte näher beschrieben wird, empfangen werden.

Gemäß einer Ausgestaltung des Verfahrens des ersten Aspekts umfasst das Verfahren weiterhin:
- Speichern der Datenteile in einem Datenspeicher in der Reihenfolge zumindest bereichsweise basierend auf der zu erwartenden benötigten Reihenfolge.

Sind die benötigten Datenteile noch nicht in dem Datenspeicher gespeichert, beispielsweise weil diese erst empfangen werden müssen, werden diese bevorzugt nach dem Empfangen in dem Datenspeicher gespeichert. Dadurch, dass das Speichern in der Reihenfolge zumindest bereichsweise basierend auf der zu erwartenden benötigten Reihenfolge erfolgt, wird wie bereits dargestellt ein beschleunigtes Ausführen der Applikation erreicht.

Gemäß einer Ausgestaltung des Verfahrens des ersten Aspekts sind die Datenteile Datenblöcke und/oder Sequenzen von Datenblöcken und die Reihenfolge ist eine Blockreihenfolge.

Es hat sich gezeigt, dass ein Beschleunigen des Ausführens der Applikation besonders effektiv erreicht werden kann, wenn Datenblöcke in einer Blockreihenfolge zumindest bereichsweise basierend auf einer zu erwartenden benötigten Blockreihenfolge in dem Datenspeicher gespeichert sind. Die Blockreihenfolge kann beispielsweise die Reihenfolge einzelner Datenblöcke oder Sequenzen von Datenblöcken vorgeben.

Unter einem Datenblock ("data block") wird insbesondere eine begrenzte, festgelegte Anzahl von Bytes angesehen. Ein Datenblock kann als einzelne Transporteinheit bzw. als kleinste in einem Zugriff les- oder schreibbare Einheit aufgefasst werden. Der Aufbau eines Datenblocks und die Elemente eines Datenblocks können von dem jeweiligen Datenspeicher, Dateisystem oder weiteren Faktoren abhängen.

Ein Datenblock kann beispielsweise eine Größe von 512 Byte bis 4096 Byte haben. Grundsätzlich sind jedoch auch kleinere und insbesondere größere Datenblöcke denkbar. Im Allgemeinen kann jeder Datenblock in dem Datenspeicher eindeutig adressiert werden. Dies kann über unterschiedliche Verfahren erfolgen. Beispielsweise kann eine Adressierung der Datenblöcke über fortlaufend nummerierte Blöcke (LBA) erfolgen. Ebenfalls ist (im Falle von Festplatten mit Spindeln) denkbar, Blöcke über Zylinder-, Kopf- und Sektornummer (CHS) zu adressieren. Auch weitere Adressierungsmethoden der Datenblöcke sind denkbar.

Besonders vorteilhaft an einer Realisierung des Verfahrens gemäß dem ersten Aspekt auf Basis von Datenblöcken und einer Blockreihenfolge ist zudem, dass hierdurch eine hohe Kompatibilität mit praktisch allen Betriebssystemen erreicht wird. Die eigentliche Funktionalität kann praktisch plattformunabhängig implementiert werden. Es muss beispielsweise lediglich eine Anpassung des entsprechenden Gerätetreibers auf die Funktionsweise des entsprechenden (virtuellen) Blockgeräts in dem jeweiligen Betriebssystem erreicht werden.

Gemäß einer Ausgestaltung des Verfahrens des ersten Aspekts sind die Datenteile auf einem Blockgerät, insbesondere einem virtuellen Blockgerät gespeichert.

Durch die Verwendung eines (virtuellen) Blockgeräts kann ein Datenspeicher zur Verfügung gestellt werden und die gewünschte Reihenfolge der Datenteile in Form von Datenblöcken erreicht werden. Unter einem (virtuellen) Blockgerät oder blockorientiertem Gerät ("block device") wird ein (virtuelles) Gerät verstanden, welches Daten in Datenblöcken speichert oder überträgt. Ein Blockgerät kann insbesondere den betriebssystemeigenen Puffer benutzen. Ein Blockgerät kann insbesondere eine Festplatte, eine SSD, ein USB-Stick oder Ähnliches sein. Durch ein virtuelles Blockgerät wird dem Betriebssystem praktisch vorgetäuscht, dass ein Blockgerät vorhanden ist und mit dem Betriebssystem kommuniziert oder kommunizieren kann. Insbesondere ist ein virtuelles Blockgerät vorteilhaft, da dieses auf jedem System softwareseitig, insbesondere durch einen Gerätetreiber zur Verfügung gestellt werden kann. Der physische Datenspeicher kann in dem Fall beispielsweise durch einen Teil des Datenspeichers einer lokalen Festplatte bereitgestellt werden.

Dem Gerätetreiber kann vorteilhaft ein eigener Zwischenspeicher ("Cache") insbesondere im Kernelspace zugewiesen sein oder zur Verfügung gestellt werden. Dies beschleunigt das Bereitstellen von Datenblöcken zusätzlich.

Diesbezüglich umfasst das Verfahren des ersten Aspekts bevorzugt weiterhin: Einbinden ("Mounten") des Blockgeräts in ein bestehendes Dateisystem. Hierdurch können die auf dem Blockgerät bzw. in dem darauf befindlichen Dateisystem gespeicherten Daten einem Betriebssystem zur Verfügung gestellt werden. Bei einem virtuellen Blockgerät sind die Daten beispielsweise in einem Speicherabbild ("Image") gespeichert.

Gemäß einer Ausgestaltung des Verfahrens des ersten Aspekts wird zum Bereitstellen von den zu der Ausführung der Applikation benötigten Datenteilen aus dem Datenspeicher ein Gerätetreiber, vorzugsweise ein Blockgerätetreiber, verwendet. Der Gerätetreiber ist bevorzugt ein Gerätetreiber für ein virtuelles Blockgerät.

Unter einem Gerätetreiber wird insbesondere ein Computerprogramm oder Softwaremodul verstanden, das die Interaktion mit (virtuellen) Geräten steuert. Dazu kann der Gerätetreiber auf der einen Seite beispielsweise direkt mit dem (virtuellen) Gerät kommunizieren und Daten mit dem (virtuellen) Gerät austauschen. Auf der anderen Seite kann der Gerätetreiber beispielsweise dem Betriebssystem und/oder der Anwendungssoftware (also insbesondere Schichten, welche über der mit dem Gerätetreiber assoziierten Schicht liegen) eine genormte Schnittstelle bieten, so dass das (virtuelle) Gerät auf gleiche Weise angesprochen werden kann wie gleichartige Geräte.

Diesbezüglich umfasst das Verfahren des ersten Aspekts bevorzugt weiterhin: Installieren eines Gerätetreibers zum Bereitstellen von den zu der Ausführung der Applikation benötigten Datenteilen aus dem Datenspeicher. Beispielsweise wird das Installieren durch einen Benutzer initiiert. Anschließend kann das (virtuelle) Gerät in ein bestehendes Dateisystem eingebunden werden. Mittels des (virtuellen) Geräts kann schließlich auf den Datenspeicher zugegriffen werden und die Applikation ausgeführt werden.

Gemäß einer Ausgestaltung des Verfahrens des ersten Aspekts umfasst das Verfahren weiterhin:
- Aussetzen einer Abarbeitung einer Ereigniswarteschlange, insbesondere falls die benötigten Datenteile in dem Datenspeicher nicht zur Verfügung stehen; und
- Wiederaufnehmen der Abarbeitung der Ereigniswarteschlage.

Eine Ereigniswarteschlange kann insbesondere Operationen (insbesondere Schreib-und/oder Leseoperationen) umfassen, welche auf den Datenspeicher angewendet werden sollen.

Beispielsweise für den Fall, dass angeforderte benötigte Datenteile (noch) nicht in dem Datenspeicher gespeichert sind und somit nicht zur Verfügung stehen, kann es vorteilhaft sein, die Abarbeitung einer Ereigniswarteschlange auszusetzen, um ein Fehlverhalten der Applikation zu vermeiden. Es ist besonders vorteilhaft, wenn die Ereigniswarteschlage die Ereigniswarteschlage ("Event-Queue") eines wie zuvor beschriebenen Gerätetreibers oder (virtuellen) Geräts ist. Dann kann das Aussetzten beispielsweise durch den Gerätetreiber erfolgen. Grundsätzlich ist aber auch möglich die Ereigniswarteschlange eines Gerätetreibers durch einen externen Befehl (des Betriebssystems oder eines Programms) auszusetzen. Es kann sich dabei vorteilhaft zunutze gemacht werden, dass über der mit dem Gerätetreiber assoziierten Schicht liegende Schichten, wie etwa das Dateisystem, auf den Gerätetreiber warten. Stehen also Datenteile nicht zur Verfügung, verhält es sich praktisch so, als würde ein langsames Lesen von dem (virtuellen) Gerät eine Verzögerung verursachen.

Beispielsweise wird die Abarbeitung der Ereigniswarteschlange für eine vorbestimmte Zeit ausgesetzt. Beispielsweise wird die Zeit, für die die Abarbeitung der Ereigniswarteschlange ausgesetzt wird, bestimmt (beispielsweise berechnet oder geschätzt). Werden die Datenteile beispielsweise über ein Netzwerk empfangen, kann beispielsweise anhand der Übertragungsrate bestimmt werden, wann die benötigten Datenteile (voraussichtlich) empfangen werden und in dem Datenspeicher gespeichert werden können und somit zur Verfügung stehen.

Anschließend kann überprüft werden, ob die Datenteile zur Verfügung stehen. Stehen die Datenteile zur Verfügung, kann die Abarbeitung der Ereignisschlange wiederaufgenommen werden. Andernfalls kann erneut ein Aussetzen der Abarbeitung der Ereigniswarteschlange erfolgen.

Gemäß einer Ausgestaltung des Verfahrens des ersten Aspekts sind die Datenteile in dem Datenspeicher zumindest in Bezug auf applikationsstartrelevante Datenteile in einer Reihenfolge zumindest bereichsweise basierend auf einer zu erwartenden benötigten Reihenfolge gespeichert.

Unter applikationsstartrelevanten Datenteilen werden Datenteile verstanden, welche relevant für das Starten der Applikation sind. Beispielsweise sind applikationsstartrelevante Datenteile, diejenigen Datenteile, die benötigt werden, um die Applikation so weit auszuführen, dass die Applikation vom Benutzer interaktiv eingesetzt werden kann. Beispielsweise sind die applikationsstartrelevanten Datenteile weniger als 10% und/oder weniger als 50 Megabyte der gesamten Applikation. Dadurch kann insbesondere der Start beim Ausführen der Applikation beschleunigt werden.

Unabhängig hiervon ist es jedoch natürlich auch möglich Datenteile, die nicht direkt für den Start der Applikation (sondern erst später) benötigt werden, in einer Reihenfolge zumindest bereichsweise basierend auf einer zu erwartenden benötigten Reihenfolge zu speichern.

Es ist beispielsweise auch denkbar, dass eine erste Menge von Datenteilen der Applikation vorgesehen ist, in der die Datenteile basierend auf der zu erwartenden benötigten Reihenfolge gespeichert sind, und eine zweite Menge von Datenteilen der Applikation vorgesehen ist, in der die Datenteile nicht basierend auf, sondern unabhängig von der zu erwartenden benötigten Reihenfolge gespeichert sind. Die erste Menge kann dann beispielsweise applikationsstartrelevante Datenteile umfassen, sodass ein schnelles Ausführen ermöglicht wird, während die Reihenfolge der Datenteile in der zweiten Menge nicht optimiert zu werden braucht.

Gemäß einer Ausgestaltung des Verfahrens des ersten Aspekts umfasst das Verfahren weiterhin:
- Verwenden von mit der Applikation assoziierten Metadateninformationen zum Ausführen der Applikation.

Unter Metadateninformationen werden insbesondere applikationsspezifische Informationen verstanden, die (zumindest teilweise) zum Ausführen der Applikation benötigt werden. Beispielsweise umfassen die Metadateninformationen Änderungen, die während der Installation und/oder dem Ausführen der Applikation an dem die Applikation ausführenden System (etwa Betriebssystem und/oder Dateisystem) erfolgt sind. Beispielsweise umfassen die Metadateninformationen Pfadinformationen, Dateiinformationen, Verzeichnisinformationen, Informationen über Umgebungsvariablen und/oder Informationen über Datenbanken (etwa Registrierungsdatenbanken) oder Modifikationen hieran (etwa neue Einträge). Auch weitere Abhängigkeiten können von den Metadateninformationen umfasst werden.

Ebenfalls könnend die Metadateninformationen Abbildungsinformationen umfassen, welche das Abbilden der für das Anfordern von den zu der Ausführung der Applikation benötigten Datenteilen verwendeten Adressierung auf die Reihenfolge der in dem Datenspeicher gespeicherten Datenteile ermöglichen. Die Abbildungsinformationen können jedoch auch unabhängig von den Metadateninformationen übertragen werden.

Gemäß einem zweiten Aspekt betrifft die Erfindung auch ein Verfahren zum Senden von Datenteilen, insbesondere zur Verwendung in einem Verfahren gemäß dem ersten Aspekt, durchgeführt von mindestens einer Vorrichtung, gemäß dem Anspruch 8.

Wie bereits in Bezug auf den ersten Aspekt ausgeführt, kann dadurch, dass die Datenteile in einem Datenspeicher in einer Reihenfolge zumindest bereichsweise basierend auf einer zu erwartenden benötigten Reihenfolge gespeichert sind, erreicht werden, dass benötigte Datenteile der Applikation regelmäßig schneller als gewöhnlich zur Verfügung stehen können und insbesondere der Vorgang des Applikationsstarts drastisch beschleunigt werden kann.

Das Verfahren gemäß dem zweiten Aspekt kann insbesondere von mindestens einer zweiten Vorrichtung, die im Rahmen weiterer Aspekte näher beschrieben wird, durchgeführt werden.

Die Datenteile können beispielsweise an eine erste Vorrichtung, welche ein Verfahren gemäß dem ersten Aspekt ausführt, gesendet werden. Beispielsweise sind die Datenteile in mindestens einer Datei, beispielsweise einem Speicherabbild ("Image") gespeichert. Das heißt, es muss lediglich das Speicherabbild gesendet werden. Wenn die gesendeten Datenteile empfangen und gespeichert werden, werden diese vorteilhaft beim Empfänger automatisch in einem Datenspeicher direkt in einer Reihenfolge zumindest bereichsweise basierend auf einer zu erwartenden benötigten Reihenfolge gespeichert.

Wie eine derartige Reihenfolge bestimmt werden kann, wird beispielhaft im Rahmen des dritten Aspekts der Erfindung beschrieben.

Gemäß einer Ausgestaltung des Verfahrens des zweiten Aspekts werden die Datenteile zumindest teilweise in der gespeicherten Reihenfolge gesendet.

Dadurch, dass die Datenteile zumindest teilweise in der gespeicherten Reihenfolge gesendet werden, werden die erwartungsgemäß zuerst benötigten Datenteile zuerst gesendet und können zuerst empfangen werden. Dadurch kann insbesondere in einer Situation, in der die benötigten Datenteile (insbesondere für den Start der Applikation benötigte Datenteile) erst noch empfangen werden müssen (etwa von der ersten Vorrichtung), auch die Zeit bis zum Start der Applikation verringert werden.

Gemäß einer Ausgestaltung des Verfahrens des zweiten Aspekts umfasst das Verfahren weiterhin:
- Empfangen einer Anfrage zum Senden von zumindest einem Teil der zu der Ausführung der Applikation benötigten Datenteile.

Wird beispielsweise von der ersten Vorrichtung festgestellt, dass benötigte Datenteile nicht in dem dortigen Datenspeicher gespeichert sind, können diese Datenteile angefragt werden, um diese zu empfangen. Die Anfrage zum Senden der Datenteile kann dann im Rahmen des Verfahrens des zweiten Aspekts empfangen werden, beispielsweise durch eine zweite Vorrichtung.

Es ist denkbar, dass mit der Anfrage zum Senden einzelne Datenteile oder Bereiche von Datenteilen angefragt werden. Bevorzugt ist ein einzelnes Anfragen von benötigten Datenteilen jedoch nicht notwendig, da die Datenteile bevorzugt kontinuierlich gesendet werden. Das heißt, die Datenteile werden ähnlich einem Stream nach und nach gesendet, ohne dass Anfragen bezüglich einzelner Datenteile empfangen werden müssen. Dies beschleunigt das Empfangen und damit das Ausführen der Applikation weiterhin.

Gemäß einer Ausgestaltung des Verfahrens des zweiten Aspekts umfasst das Verfahren weiterhin:
- Senden von mit der Applikation assoziierten Metadateninformationen zum Ausführen der Applikation.

Wie bereits im Rahmen des ersten Aspekts erläutert, umfassen die Metadateninformationen beispielsweise Pfadinformationen, Dateiinformationen, Verzeichnisinformationen, Informationen über Umgebungsvariablen und/oder Informationen über Datenbanken (etwa Registrierungsdatenbanken) oder Modifikationen hieran (etwa neue Einträge). Die Metadateninformationen können beispielsweise ebenfalls in der mindestens einen Datei enthalten sein. Ebenfalls kann mindestens eine separate Datei vorgesehen sein, in der die Metadateninformationen enthalten sind. Die Metadateninformationen könne auch im Speicher vorgehalten werden. Die Metadateninformationen werden bevorzugt zuerst gesendet. Beispielsweise können die Metadateninformationen im Rahmen eines Push-Vorgangs oder im Rahmen eines Pull-Vorgangs gesendet werden.

Ebenfalls könnend die Metadateninformationen Abbildungsinformationen umfassen, welche das Abbilden der für das Anfordern von den zu der Ausführung der Applikation benötigten Datenteilen verwendeten Adressierung auf die Reihenfolge der in dem Datenspeicher gespeicherten Datenteile ermöglichen. Die Abbildungsinformationen können jedoch auch unabhängig von den Metadateninformationen übertragen werden.

In Bezug auf weitere Ausgestaltungen insbesondere in Hinblick auf die Ausgestaltung der Datenteile als Datenblöcke wird auf die Ausführungen in Rahmen des ersten Aspekts verwiesen.

Gemäß einem dritten Aspekt betrifft die Erfindung auch ein Verfahren zum Speichern benötigter Datenteile, durchgeführt von mindestens einer Vorrichtung, gemäß dem Anspruch 11.

Das Verfahren ermöglicht, die benötigten Datenteile in einem Datenspeicher in einer Reihenfolge zumindest bereichsweise basierend auf der zu erwartenden benötigten Reihenfolge zu speichern.

Zumindest basierend auf der erfassten benötigten Reihenfolge kann eine zu erwartenden benötigte Reihenfolge bestimmt werden. Beispielsweise entspricht die erfasste benötigte Reihenfolge der zu erwartenden benötigten Reihenfolge. Beispielsweise ist die erfasste benötigte Reihenfolge nur eine von mehreren Faktoren (beispielsweise weitere erfasste benötigte Reihenfolgen), um die zu erwartende benötigte Reihenfolge zu bestimmen.

Schließlich können die benötigten Datenteile in einem Datenspeicher in einer Reihenfolge zumindest bereichsweise basierend auf der zu erwartenden benötigten Reihenfolge gespeichert werden. Im Ergebnis sind die Datenteile somit im Vergleich zu der ursprünglichen gespeicherten Reihenfolge, wie sie beispielsweise nach einer gewöhnlichen Installation der Applikation in einem Datenspeicher gegeben ist, umsortiert. Somit steht eine optimierte Applikation zur Verfügung. Wie bereits im Rahmen des ersten Aspektes erläutert, wird dadurch ermöglicht, dass die Applikation nunmehr beschleunigt, beispielsweise gemäß dem Verfahren des ersten Aspekts, ausgeführt werden kann.

Zudem können Abbildungsinformationen gespeichert werden, welche ein Abbilden zwischen der ursprünglichen gespeicherten Reihenfolge, wie sie beispielsweise nach einer gewöhnlichen Installation der Applikation in einem Datenspeicher gegeben ist, und der umsortierten Reihenfolge ermöglichen. Mit anderen Worten ermöglichen die Abbildungsinformationen ein Abbilden der für das Anfordern von den zu der Ausführung der Applikation benötigten Datenteilen verwendeten Adressierung auf die Reihenfolge der in dem Datenspeicher umsortierten gespeicherten Datenteile.

Das Verfahren muss nicht zwingend für alle von der Applikation benötigten Datenteile durchgeführt werden, es kann beispielsweise auch nur für einen Teil der benötigten Datenteile durchgeführt werden.

Das Verfahren kann insbesondere von mindestens einer dritten Vorrichtung, welche im Rahmen weiterer Aspekte näher beschrieben wird, durchgeführt werden.

Gemäß einer Ausgestaltung des Verfahrens des dritten Aspekts umfasst das Verfahren weiterhin einen oder mehrere der folgenden Schritte:
- Installieren eines Gerätetreibers, bevorzugt eines Blockgerätetreibers;
- Erstellen eines Speicherabbildes;
- Einbinden eines Geräts über einen Gerätetreiber, insbesondere über den installierten Gerätetreiber;
- Installieren der Applikation, insbesondere auf dem erstellten Speicherabbild,
- Bestimmen von mit der Applikation assoziierten Metadateninformationen zum Ausführen der Applikation;
- Ausführen der Applikation;
- Erfassen der benötigten Reihenfolge von zu der Ausführung einer Applikation benötigten Datenteilen.

Einer oder mehrere der Schritte dienen insbesondere der Vorbereitung zum Erfassen einer benötigten Reihenfolge von zu der Ausführung der Applikation benötigten Datenteilen. Eine oder mehrere (insbesondere alle) der obigen Schritte werden beispielsweise auf einer oder mehreren Datenverarbeitungsanlagen durchgeführt, insbesondere in einer Analyseumgebung. Unter einer Analyseumgebung wird insbesondere eine technisch-organisatorische Infrastruktur verstanden, die zum Analysieren von Software benutzt wird.

Durch einen Gerätetreiber, insbesondere einen Blockgerätetreiber, kann das Erfassen einer benötigten Reihenfolge von zu der Ausführung der Applikation benötigten Datenteilen besonders performant durchgeführt werden. Weiterhin kann ein Speicherabbild ("Image") erstellt werden. Nach der Installation des Gerätetreibers kann ein Gerät, insbesondere ein Blockgerät über den Gerätetreiber und damit das Speicherabbild in ein bestehendes Dateisystem eingebunden werden. Das Blockgerät ist dabei bevorzugt ein virtuelles Blockgerät. Über den Gerätetreiber kann auf das Gerät und somit das Speicherabbild zugegriffen werden. Anschließend kann die Applikation auf dem Gerät und somit auf dem Speicherabbild installiert werden.

Es können nun zusätzlich mit der Applikation assoziierte Metadateninformationen zum Ausführen der Applikation bestimmt werden. Dies kann beispielsweise durch einen Vergleich des Systems (etwa des Betriebssystems und/oder Dateisystems) vor der Installation und nach der Installation der Applikation erfolgen. Ebenfalls kann auch das Durchführen von Systemänderungen selbst (beispielsweise durch Erfassen von Lese- und/oder Schreibvorgängen) erfasst werden. Dies vereinfacht das Ausführen der Applikation auf anderen Vorrichtungen (beispielsweise der ersten Vorrichtung). Diesen braucht lediglich ein Speicherabbild der bereits installierten Applikation und die Metadateninformationen zur Verfügung gestellt werden, ohne dass eine erneute Installation erfolgen muss. Wie bereits im Rahmen des ersten und zweiten Aspekts erläutert, umfassen die Metadateninformationen beispielsweise Pfadinformationen, Dateiinformationen, Verzeichnisinformationen, Informationen über Umgebungsvariablen und/oder Informationen über Datenbanken (etwa Registrierungsdatenbanken) oder Modifikationen hieran (etwa neue Einträge).

Anschließend kann die Applikation ausgeführt werden. Diese Applikation entspricht der gemäß dem Verfahren des ersten Aspekts auszuführenden Applikation. Insofern wird auf die Ausführungen im Rahmen des ersten Aspekts verwiesen. Dabei sind die von der Applikation benötigten Datenteile jedoch zunächst (zumindest teilweise) noch nicht in einer Reihenfolge zumindest bereichsweise basierend auf der zu erwartenden benötigten Reihenfolge gespeichert.

Im Rahmen des Ausführens der Applikation wird die Applikation Datenteile zu ihrer Ausführung in einer gewissen (zeitlichen) Reihenfolge benötigen. Hierzu kann beispielsweise die Applikation, das Betriebssystem und/oder das Dateisystem benötigte Datenteile anfordern. Diese Reihenfolge kann erfasst werden, wobei dies vorteilhaft unterhalb der Ebene des Dateisystems erfolgen kann. Beispielsweise erfolgt das Erfassen durch einen Gerätetreiber. Wie bereits im Rahmen des ersten Aspekts erläutert, sind die Datenteile bevorzugt Datenblöcke und die Reihenfolge ist eine Blockreihenfolge. Hierzu wird auf die Ausführung im Rahmen des ersten Aspekts verwiesen.

Die erfasste benötigte Reihenfolge von den zu der Ausführung der Applikation benötigten Datenteilen umfasst protokollierte Informationen über Leseoperationen auf die benötigten Datenteile während des Ausführens der Applikation.

Hierdurch kann das Erfassen der benötigten Reihenfolge von den zu der Ausführung der Applikation benötigten Datenteilen besonders performant erfolgen. Besonders vorteilhaft erfolgt das Protokollieren der Informationen durch den Gerätetreiber. Beispielsweise sind im Gerätetreiber definierte Schreib- und/oder Leseoperationen erweitert, sodass diese jedenfalls ein Protokollieren von Informationen über Leseoperationen auf die benötigten Datenteile während des Ausführens der Applikation ermöglichen. Ein Protokollieren von Informationen über Leseoperationen auf die benötigten Datenteile kann beispielsweise dadurch erfolgen, dass eine (relative oder absolute) Adressierung protokolliert wird. Beispielsweise wird eine Protokolldatei (etwa eine Log-Datei) erzeugt, welche die protokollierten Informationen beinhaltet.

Gemäß einer Ausgestaltung des Verfahrens des dritten Aspekts ermöglichen die protokollierten Informationen eine eindeutige Identifikation des jeweiligen benötigten Datenteils.

Eine eindeutige Identifikation kann beispielsweise durch die Protokollierung einer eindeutigen (relativen und/oder absoluten) Adressierung erreicht werden. Die Adressierung kann beispielsweise eine eindeutige Position des Datenteils im Datenspeicher (beispielsweise in Form einer eindeutigen Speicheradresse oder eines eindeutigen Speicheroffsetwertes) umfassen. Beispielsweise kann die Adressierung einen eindeutigen mehrere Datenteile umfassenden Bereich des Datenspeichers benennen. Sind die Datenteile beispielsweise Datenblöcke, kann beispielsweise eine eindeutige Blocknummer oder ein eindeutiger Blocknummernbereich protokolliert werden.

Gemäß einer Ausgestaltung des Verfahrens des dritten Aspekts umfassen die protokollierten Informationen weiterhin eine oder mehrere der folgenden Informationen:
- Zeitinformationen;
- applikationsspezifische Ereignisse;
- benutzerspezifische Informationen.

Die Zeitinformationen können beispielswiese relative und/oder absolute Zeitinformationen über den Zeitpunkt, wann ein Datenteil oder ein Bereich von Datenteilen benötigt wurde, das heißt insbesondere wann ein Lesezugriff auf den entsprechenden Datenteil oder den Bereich erfolgt ist, umfassen.

Applikationsspezifische Ereignisse können beispielsweise den Beginn des Startens der Applikation, der Beginn eines interaktiven Teils der Applikation, und/oder der Beginn eines bestimmten Applikationsabschnitts (bei einem Spiel beispielsweise der Beginn des ersten Levels, des zweiten Levels, des dritten Levels usw.) sein.

Benutzerspezifische Informationen können beispielsweise Eingabeinformationen des Benutzers sein. Eingabeinformationen sind insbesondere Informationen über mittels Eingabegeräten (zum Beispiel mit der Tastatur oder mit der Maus) erfolgte Eingaben, beispielsweise welche Tasten gedrückt wurden.

Das Bestimmen der zu erwartenden benötigten Reihenfolge kann dann vorteilhaft zusätzlich basierend auf einer oder mehrere dieser Informationen erfolgen. Beispielsweise können bestimmte benutzerspezifische Informationen wie Eingabeinformationen die zu erwartende benötigte Reihenfolge beeinflussen. Dies kann dann beispielsweise beim Empfangen von den zu der Ausführung der Applikation benötigten Datenteilen berücksichtigt werden.

Gemäß einer Ausgestaltung des Verfahrens des dritten Aspekts werden mehrfach erfasste benötigte Reihenfolgen von zu der Ausführung einer Applikation benötigten Datenteilen erhalten, und die zu erwartende benötigte Reihenfolge wird zumindest basierend auf den mehrfach erfassten benötigten Reihenfolgen bestimmt.

Beispielsweise wird das Erfassen mindestens zweimal, bevorzugt aber eine Vielzahl von Malen durchgeführt. Wird die zu erwartende benötigte Reihenfolge dann zumindest basierend auf den mehrfach erfassten benötigten Reihenfolgen bestimmt, kann die zu erwartende benötigte Reihenfolge verlässlicher bestimmt werden. Dies ist insbesondere vorteilhaft bei interaktiven Applikationen, bei denen der Programmfluss der Applikation durch den Benutzer beeinflusst werden kann, da hierdurch auch die Reihenfolge der benötigten Datenteile beeinflusst wird. Beispielsweise werden hierzu die jeweiligen erfassten benötigten Reihenfolgen vereinigt, um eine vereinigte oder kombinierte Reihenfolge zu bilden, auf dessen Basis die zu erwartende benötigte Reihenfolge bestimmt werden kann.

Das mehrfache Erfassen kann beispielsweise auf unterschiedlichen Vorrichtungen durchgeführt werden, beispielsweise auf einer Reihe von Analysevorrichtungen. Hingegen kann das Bestimmen der zu erwartenden benötigten Reihenfolge und das Speichern der Benötigten Datenteile bevorzugt auf einer zentralen Vorrichtung durchgeführt werden.

Gemäß einer Ausgestaltung des Verfahrens des dritten Aspekts wird im Fall eines sequentiellen Abschnitts einer erfassten benötigten Reihenfolge der sequentielle Abschnitt zusammengefasst.

Hierdurch kann erreicht werden, dass sequentielle Abschnitte benötigter Reihenfolgen möglichst als eine Sequenz erhalten bleiben, insbesondere auch dann, wenn das Erfassen mehrfach durchgeführt wird und die erfassten benötigten Reihenfolgen zusammengeführt werden. Wird also beispielsweise in einem Fall der sequentielle Abschnitt (2, 3, 4, 5... n-1, n) von benötigten Datenteilen erfasst, kann der sequentielle Abschnitt als (2...n) zusammengefasst werden und so protokolliert werden. Die sequentiellen Abschnitte müssen jedoch nicht zwangsweise zusammengefasst werden. Beispielsweise werden nur sequentielle Abschnitte einer bestimmten Länge oder eine maximale Anzahl von sequentiellen Abschnitten zusammengefasst.

Gemäß dem dritten Aspekt gespeicherte benötigte Datenteile können dann beispielsweise gemäß dem Verfahren des zweiten Aspekts gesendet werden. In einem Verfahren des ersten Aspekts kann dann der Start der Applikation schließlich beschleunigt erfolgen.

Gemäß einem weiteren Aspekt betrifft die Erfindung auch eine Vorrichtung, welche dazu eingerichtet ist oder entsprechende Mittel umfasst, das Verfahren gemäß dem ersten Aspekt durchzuführen und/oder zu steuern (erste Vorrichtung). Die erste Vorrichtung kann insbesondere eine Datenverarbeitungsanlage eines Endbenutzers sein, beispielsweise ein Client.

Gemäß einem weiteren Aspekt betrifft die Erfindung auch ein Computerprogramm, das Programmanweisungen umfasst, die einen Prozessor zur Ausführung und/oder Steuerung eines Verfahrens gemäß dem ersten Aspekt (oder Teilen hiervon) veranlassen, wenn das Computerprogramm auf dem Prozessor läuft (erstes Computerprogramm).

Gemäß einem weiteren Aspekt wird die eingangs genannte Aufgabe auch durch eine Vorrichtung gelöst, welche dazu eingerichtet ist oder entsprechende Mittel umfasst, das Verfahren gemäß dem zweiten Aspekt durchzuführen und/oder zu steuern (zweite Vorrichtung). Die zweite Vorrichtung kann insbesondere ein Server sein, der Daten für Endbenutzer zur Verfügung stellt.

Gemäß einem weiteren Aspekt betrifft die Erfindung auch ein Computerprogramm, das Programmanweisungen umfasst, die einen Prozessor zur Ausführung und/oder Steuerung eines Verfahrens gemäß dem zweiten Aspekt (oder Teilen hiervon) veranlassen, wenn das Computerprogramm auf dem Prozessor läuft (zweites Computerprogramm).

Gemäß einem weiteren Aspekt wird die eingangs genannte Aufgabe auch durch eine Vorrichtung gelöst, welche dazu eingerichtet ist oder entsprechende Mittel umfasst, ein Verfahren gemäß dem dritten Aspekt durchzuführen und/oder zu steuern (dritte Vorrichtung). Die dritte Vorrichtung kann insbesondere mehrere Datenverarbeitungsanlagen umfassen, beispielsweise umfasst die dritte Vorrichtung mehrere Analysedatenverarbeitungsanlagen und einen zentralen Server.

Gemäß einem weiteren Aspekt betrifft die Erfindung auch ein Computerprogramm, das Programmanweisungen umfasst, die einen Prozessor zur Ausführung und/oder Steuerung eines Verfahrens gemäß dem dritten Aspekt (oder Teilen hiervon) veranlassen, wenn das Computerprogramm auf dem Prozessor läuft (drittes Computerprogramm).

Vorzugsweise umfasst die jeweilige Vorrichtung zumindest einen Prozessor und zumindest einen Speicher mit Computerprogrammcode, wobei der zumindest eine Speicher und der Computerprogrammcode dazu eingerichtet sind, mit dem zumindest einen Prozessor, zumindest ein Verfahren gemäß dem ersten, zweiten und/oder dritten Aspekt auszuführen und/oder zu steuern.

Zum Beispiel sind die erste, die zweite und die dritte Vorrichtung voneinander verschiedene Datenverarbeitungsanlagen, die softwaremäßig und/oder hardwaremäßig eingerichtet sind, um die jeweiligen Schritte (oder einen Teil hiervon) des jeweiligen erfindungsgemäßen Verfahrens ausführen zu können. Unter softwaremäßig und/oder hardwaremäßig eingerichtet soll zum Beispiel die Vorbereitung der jeweiligen Datenverarbeitungsanlage verstanden werden, die notwendig ist, um die Schritte (oder einen Teil hiervon) eines jeweiligen Verfahrens beispielsweise in Form eines Computerprogramms ausführen zu können. Beispiele für eine Datenverarbeitungsanlage sind ein Computer, ein Desktop-Computer, ein tragbarer Computer wie ein Laptop-Computer, ein Tablet-Computer, ein persönlicher digitaler Assistent, ein Smartphone und/oder ein Thinclient.

Grundsätzlich ist aber auch denkbar, dass beispielsweise Schritte einzelner Aspekte, beispielsweise des zweiten und dritten Aspekts, auf einer gemeinsamen Datenverarbeitungsanlage durchgeführt werden. Ebenfalls ist denkbar, dass Schritte eines Aspekts auf unterschiedlichen Datenverarbeitungsanlagen durchgeführt werden.

Zum Beispiel umfassen die erste, die zweite und/oder die dritte Vorrichtung jeweils Mittel zum Ausführen eines der erfindungsgemäßen Computerprogramme wie einen Prozessor. Unter einem Prozessor soll zum Beispiel eine Kontrolleinheit, ein Mikroprozessor, eine Mikrokontrolleinheit wie ein Mikrocontroller, ein digitaler Signalprozessor (DSP), eine anwendungsspezifische Integrierte Schaltung (ASIC) oder ein Field Programmable Gate Arrays (FPGA) verstanden werden.

Zum Beispiel umfassen die erste, die zweite und/oder die dritte Vorrichtung ferner jeweils Mittel zum Speichern von Informationen wie einen Programmspeicher und/oder einen Hauptspeicher.

Zum Beispiel umfassen die erste, die zweite und/oder die dritte Vorrichtung ferner jeweils Mittel zum Empfangen und/oder Senden von Informationen über ein Netzwerk wie eine Netzwerkschnittstelle. Zum Beispiel sind die erste, die zweite und/oder die dritte Vorrichtung über ein oder mehrere Netzwerke miteinander verbunden und/oder verbindbar.

Die Computerprogramme sind beispielsweise über ein Netzwerk verteilbar. Ein Computerprogramm kann zumindest teilweise Software und/oder Firmware eines Prozessors sein.

Das erste, das zweite und/oder das dritte Computerprogramm kann beispielsweise ein Anwendungsprogramm umfassen. Das erste und/oder zweite Computerprogramm umfasst insbesondere einen Gerätetreiber.

Die erfindungsgemäßen Computerprogramme können jeweils in einem computerlesbaren Speichermedium gespeichert sein, welches eines oder mehrere erfindungsgemäße Computerprogramme enthält und z.B. als magnetisches, elektrisches, elektro-magnetisches, optisches und/oder andersartiges Speichermedium ausgebildet ist. Ein solches computerlesbares Speichermedium ist vorzugsweise gegenständlich (also "berührbar"), zum Beispiel ist es als Datenträgervorrichtung ausgebildet. Eine solche Datenträgervorrichtung ist beispielsweise tragbar oder in einer Vorrichtung fest installiert. Beispiele für eine solche Datenträgervorrichtung sind flüchtige oder nicht-flüchtige Speicher mit wahlfreiem-Zugriff (RAM) wie z.B. NOR-Flash-Speicher oder mit sequentiellen-Zugriff wie NAND-Flash-Speicher und/oder Speicher mit Nur-Lese-Zugriff (ROM) oder Schreib-Lese-Zugriff. Computerlesbar soll zum Beispiel so verstanden werden, dass das Speichermedium von einem Computer bzw. einer Datenverarbeitungsanlage (aus)gelesen und/oder beschrieben werden kann, beispielsweise von einem Prozessor.

Die zuvor in dieser Beschreibung beschriebenen beispielhaften Ausgestaltungen der vorliegenden Erfindung sollen auch in allen Kombinationen miteinander offenbart verstanden werden.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen.

Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

### Kurze Beschreibung der Zeichnung

In der Zeichnung zeigt
- Fig. 1: ein Blockdiagramm einer beispielshaften Datenverarbeitungsanlage;
- Fig. 2: eine schematische Darstellung eines Systems verschiedener beispielhafter Vorrichtungen zur Durchführung der Verfahren gemäß der unterschiedlichen Aspekte;
- Fig. 3: ein Ablaufdiagramm eines beispielhaften Verfahrens, welches im Rahmen eines Ausführungsbeispiels eines Verfahrens gemäß dem dritten Aspekt durchgeführt werden kann;
- Fig. 4: eine schematische Darstellung verschiedener Schichten eines Betriebssystems;
- Fig. 5: ein Ablaufdiagramm eines Ausführungsbeispiels eines Verfahrens gemäß dem dritten Aspekt;
- Fig. 6: ein Ablaufdiagramm eines Ausführungsbeispiels eines Verfahrens gemäß dem zweiten Aspekt; und
- Fig. 7: ein Ablaufdiagramm eines Ausführungsbeispiels eines Verfahrens gemäß dem ersten Aspekt.

### Detaillierte Beschreibung einiger beispielhafter Ausführungsformen der vorliegenden Erfindung

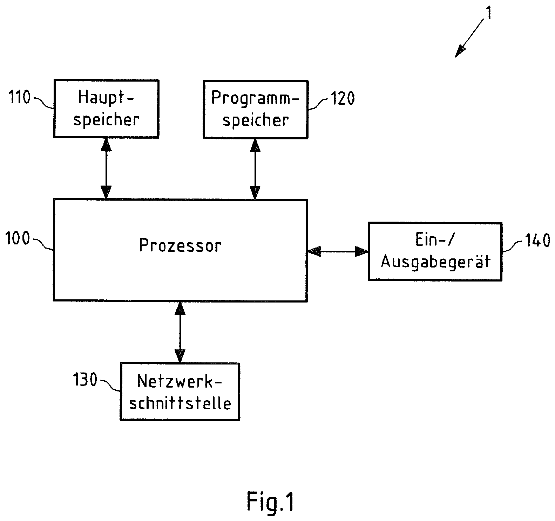

Fig. 1 zeigt ein Blockdiagramm einer beispielhaften Ausführungsform einer Datenverarbeitungsanlage 1. Die Datenverarbeitungsanlage 1 dient als Beispiel für Vorrichtungen gemäß der unterschiedlichen Aspekte, insbesondere kann die erste, die zweite und/oder die dritte Vorrichtung gemäß der Datenverarbeitungsanlage 1 ausgeführt sein.

Die Datenverarbeitungsanlage 1 kann beispielsweise ein Computer, ein Desktop-Computer, ein tragbarer Computer wie ein Laptop-Computer, ein Tablet-Computer, ein persönlicher digitaler Assistent, ein Smartphone und/oder ein Thinclient sein. Die Datenverarbeitungsanlage kann beispielsweise die Funktion eines Servers oder eines Clients erfüllen.

Prozessor 100 der Datenverarbeitungsanlage 1 ist insbesondere als Mikroprozessor, Mikrokontrolleinheit wie Mikrocontroller, digitaler Signalprozessor (DSP), Anwendungsspezifische Integrierte Schaltung (ASIC) oder Field Programmable Gate Array (FPGA) ausgebildet.

Prozessor 100 führt Programmanweisungen aus, die in Programmspeicher 120 gespeichert sind, und speichert beispielsweise Zwischenergebnisse oder Ähnliches in Hauptspeicher 110. Zum Beispiel ist Programmspeicher 120 ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher. Hauptspeicher 110 ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Programmspeicher 120 ist vorzugsweise ein lokaler mit der Datenverarbeitungsanlage 1 fest verbundener Datenträger. Mit der Datenverarbeitungsanlage 1 fest verbundene Datenträger sind beispielsweise Festplatten, die in die Datenverarbeitungsanlage 1 eingebaut sind. Alternativ kann der Datenträger beispielsweise auch ein mit der Datenverarbeitungsanlage 1 trennbar verbindbarer Datenträger sein wie ein Speicher-Stick, ein Wechseldatenträger, eine tragbare Festplatte, eine CD, eine DVD und/oder eine Diskette.

Programmspeicher 120 enthält das Betriebssystem von der Datenverarbeitungsanlage 1, das beim Starten der Datenverarbeitungsanlage 1 zumindest teilweise in Hauptspeicher 110 geladen und vom Prozessor 100 ausgeführt wird. Insbesondere wird beim Starten von Datenverarbeitungsanlage 1 zumindest ein Teil des Kerns des Betriebssystems in den Hauptspeicher 110 geladen und von Prozessor 100 ausgeführt. Das Betriebssystem von Datenverarbeitungsanlage 1 ist beispielsweise ein Windows-, UNIX-, insbesondere Linux-, Android-, Apple iOS-und/oder MAC-Betriebssystem.

Das Betriebssystem ermöglicht insbesondere die Verwendung der Datenverarbeitungsanlage 1 zur Datenverarbeitung. Es verwaltet beispielsweise Betriebsmittel wie Hauptspeicher 110 und Programmspeicher 120, Netzwerkschnittstelle 130, Ein- und Ausgabegerät 140, stellt unter anderem durch Programmierschnittstellen anderen Programmen grundlegende Funktionen zur Verfügung und steuert die Ausführung von Programmen.

Prozessor 100 steuert die Netzwerkschnittstelle 130, welche beispielsweise eine Netzwerkkarte, ein Netzwerkmodul und/oder ein Modem ist und eingerichtet ist, um eine Verbindung der Datenverarbeitungsanlage 1 mit einem Netzwerk herzustellen. Netzwerkschnittstelle 130 kann beispielsweise Daten über das Netzwerk empfangen und an Prozessor 100 weiterleiten und/oder Daten von Prozessor 100 empfangen und über das Netzwerk senden. Beispiele für ein Netzwerk sind ein lokales Netzwerk (LAN) wie ein Ethernet-Netzwerk oder ein IEEE 802-Netzwerk, ein großräumiges Netzwerk (WAN), ein drahtloses Netzwerk, ein drahtgebundenes Netzwerk, ein Mobilfunknetzwerk, ein Telefonnetzwerk und/oder das Internet.

Des Weiteren kann Prozessor 100 zumindest ein Ein-/Ausgabegerät 140 steuern. Ein-/Ausgabegerät 140 ist beispielsweise eine Tastatur, eine Maus, eine Anzeigeeinheit, ein Mikrofon, eine berührungsempfindliche Anzeigeeinheit, ein Lautsprecher, ein Lesegerät, ein Laufwerk und/oder eine Kamera. Ein-/Ausgabegerät 140 kann beispielsweise Eingaben eines Benutzers aufnehmen und an Prozessor 100 weiterleiten und/oder Informationen für den Benutzer von Prozessor 100 empfangen und ausgeben.

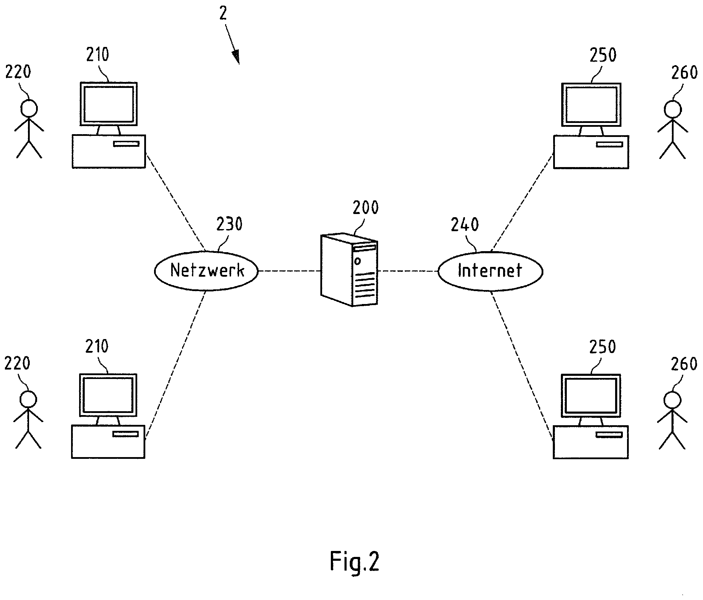

Fig. 2 zeigt eine schematische Darstellung eines Systems 2 verschiedener beispielhafter Vorrichtungen zur Durchführung der Verfahren gemäß den unterschiedlichen Aspekten.

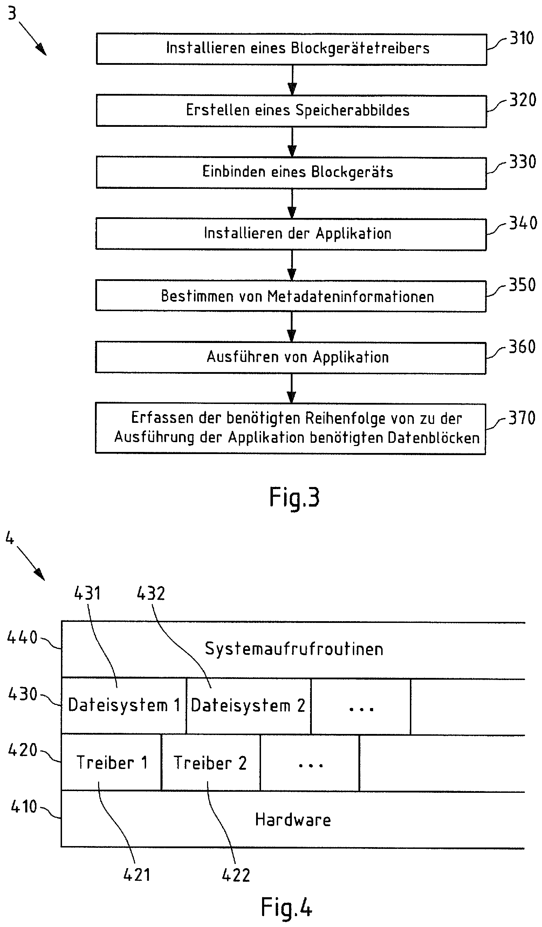

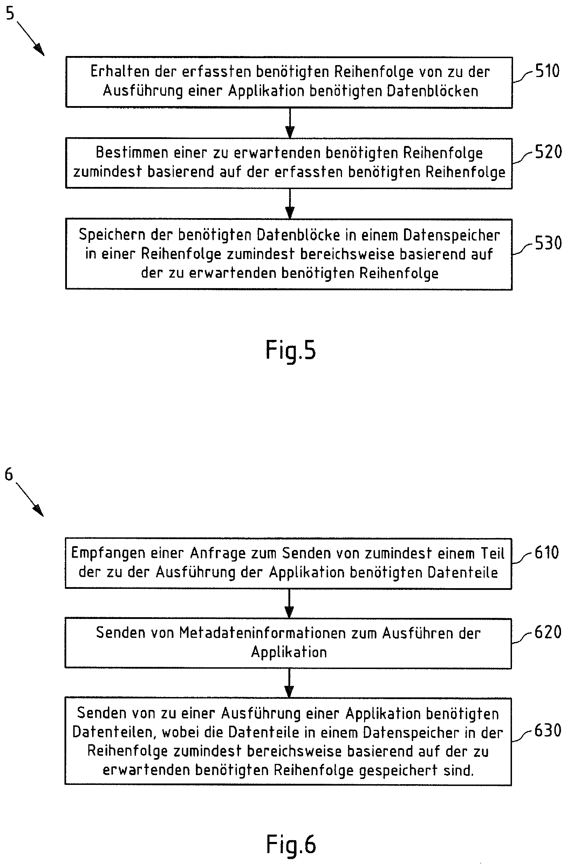

Server 200 kann zusammen mit den Computern 210 Ausgestaltungen des Verfahrens gemäß dem dritten Aspekt ausführen, wie in Zusammenhang mit Fig. 3 näher beschrieben wird. Ebenfalls kann Server 200 Ausgestaltungen des Verfahrens gemäß dem zweiten Aspekt durchführen, wie in Zusammenhang mit Fig. 5 näher beschrieben wird. Schließlich können die Computer 250 Ausgestaltungen des Verfahrens gemäß dem ersten Aspekt durchführen, wie in Zusammenhang mit Fig. 6 näher beschrieben wird.

Fig. 3 zeigt zunächst ein Ablaufdiagramm 3 eines beispielhaften Verfahrens, welches im Rahmen eines Ausführungsbeispiels eines Verfahrens gemäß dem dritten Aspekt durchgeführt werden kann.

Das Verfahren kann auf einem oder mehreren der Computer 210 durchgeführt werden. Die Computer 210 stellen dabei eine Analyseumgebung bereit. Zunächst wird jeweils ein Blockgerätetreiber für ein virtuelles Blockgerät installiert (Schritt 310). Anschließend wird auf dem jeweiligen Computer 210 ein Speicherabbild erstellt (Schritt 320). Mithilfe des Blockgerätetreibers kann ein virtuelles Blockgerät und somit das Speicherabbild in das Dateisystem des Betriebssystems des jeweiligen Computers 210 eingebunden werden (Schritt 330). Anschließend kann eine zu optimierende Applikation (etwa ein Computerspiel) auf dem erstellten Speicherabbild installiert werden (Schritt 340). Das Speicherabbild ist dabei physikalisch beispielsweise auf dem jeweiligen lokalen Programmspeicher120 (etwa auf der Festplatte) des jeweiligen Computers 210 gespeichert. Somit befinden sich in dem jeweiligen Programmspeicher 120 zu der Ausführung der Applikation benötigte Datenblöcke. Diese sind jedoch in einer noch nicht optimierten Reihenfolge gespeichert.

In Schritt 350, welcher nach Schritt 340 oder zumindest teilweise auch während Schritt 340 durchgeführt werden kann, können mit der Applikation assoziierte Metadateninformationen zum Ausführen der Applikation bestimmt werden. Dabei werden Änderungen an dem auf dem jeweiligen Computer 210 installierten Betriebssystem und Dateisystem erfasst, die notwendig sind, um die Applikation starten zu können. Diese werden beispielsweise in einer Datei gespeichert.

Anschließend kann die Applikation auf dem jeweiligen Computer 210 ausgeführt werden (Schritt 360) und durch den jeweiligen Benutzer 220 benutzt werde. Dabei kann die benötigte Reihenfolge von zu der Ausführung einer Applikation benötigten Datenblöcken erfasst werden (Schritt 370).

Fig. 4 zeigt hierzu eine schematische Darstellung verschiedener Schichten eines Betriebssystems 4, wie es beispielsweise auf den einzelnen Computern 210 oder 250 vorhanden ist. Es sind vier Schichten 410, 420, 430, 440 dargestellt. Ein Betriebssystem 4 kann auch noch weitere Schichten, welche darüber, darunter oder dazwischen angeordnet sind, aufweisen. In der Schicht 420 sind Gerätetreiber 421, 422 ("Treiber 1", "Treiber 2") vorgesehen. Diese können ein Computerprogramm oder Softwaremodul sein, das die Interaktion mit der Hardware der darunter liegenden Schicht 410 steuert. Auf der anderen Seite kommuniziert der Gerätetreiber mit einem Dateisystem 431, 432 der Schicht 430 ("Dateisystem 1", "Dateisystem 2"). Die Dateisysteme können wiederum mit den Systemaufrufroutinen der Schicht 440 kommunizieren, die beispielsweise durch die Applikation verwendet werden können. Grundsätzlich können auch verschiedene Instanzen eines Treibers verwendet werden, beispielsweise damit unterschiedliche Filesysteme mit nur einem Treiber kommunizieren müssen. Beispielsweise können mehrere Instanzen eines virtuellen Blockgeräts zeitgleich verwendet werden, welche jeweils eine andere Applikation beinhaltet.

Benötigt die Applikation nun bestimmte Datenblöcke, werden diese über ein Dateisystem, beispielsweise Dateisystem 431 angefragt. Diese Anfrage wird vom Blockgerätetreiber, beispielsweise Treiber 421, welcher auf die auf dem Image installierte Applikation zugreifen kann, bedient und die benötigten Datenblöcke werden zurückgegeben.

Dabei sind die Schreib- und/oder Leseoperationen im Blockgerätetreiber 421 derart erweitert, dass der angefragte Datenblock (etwa durch Protokollieren einer den Datenblock eindeutig identifizierenden Blocknummer, einer Speicheradresse und/oder eines Speicheroffsetwertes) protokolliert wird. Somit wird die benötigte Blockreihenfolge von den zu der Ausführung der Applikation benötigten Datenblöcken mittels des Blockgerätetreibers 421 protokolliert. Zusätzlich werden Zeitinformationen in Form eines Zeitoffsets protokolliert. Ebenfalls können weitere Informationen wie applikationsspezifische Ereignisse oder benutzerspezifische Informationen protokolliert werden.

Beispielsweise wird auf einem der Computer 210 die folgende erste benötigte Reihenfolge erfasst, welche die Blocknummer des benötigten Datenblocks und den entsprechenden Zeitoffset angibt:

| | | | | | | |
|---|---|---|---|---|---|---|
| Blockindex | 0 | 2 | 0 | 8 | 5 | 7 |
| Zeitoffset | 0.00 | 0.00 | 0.01 | 0.02 | 1.20 | 1.30 |

Beispielsweise wird auf einem weiteren der Computer 210 die folgende zweite benötigte Reihenfolge erfasst, welche die Blocknummer des benötigten Datenblocks und den entsprechenden Zeitoffset angibt:

| | | | | | | | |
|---|---|---|---|---|---|---|---|
| Blockindex | 0 | 2 | 0 | 9 | 5 | 6 | 7 |
| Zeitoffset | 0.00 | 0.00 | 0.01 | 0.02 | 0.02 | 1.10 | 1.30 |

Fig. 5 zeigt nun ein Ablaufdiagramm 5 eines Ausführungsbeispiels eines Verfahrens gemäß dem dritten Aspekt.

Die mehrfach erfassten Reihenfolgen können beispielsweise dem Server 200 über das Netzwerk 230 zur Verfügung gestellt werden, sodass der Server die erfassten benötigten Reihenfolgen von zu der Ausführung einer Applikation benötigten Datenblöcken erhält (Schritt 510).

Auf deren Basis kann der Server 200 eine zu erwartende benötigte Reihenfolge bestimmen (Schritt 520). Hierzu können die mehrfach erfassten Reihenfolgen nach der Zeitinformation sortiert und vereinigt werden, sodass sich die folgende Reihenfolge ergibt:

| | | | | | | | |
|---|---|---|---|---|---|---|---|
| Blockindex | 0 | 2 | 0 | 8 | 9 | 5 6 | 7 |
| Zeitoffset | 0.00 | 0.00 | 0.01 | 0.02 | 0.02 | 0.02 1.10 | 1.30 |

Hieraus kann also die zu erwartende benötigte Blockreihenfolge (0, 2, 0, 8, 9, 5, 6, 7) bestimmt werden. Optional können mehrfache enthaltene Datenblöcke ignoriert werden, sodass sich die zu erwartende benötigte Blockreihenfolge (0, 2, 8, 9, 5, 6, 7) ergibt.

Die so bestimmte zu erwartende benötigte Blockreihenfolge wird dann verwendet, um die benötigten Datenblöcke in einem Datenspeicher in einer Reihenfolge zumindest bereichsweise basierend auf der zu erwartenden benötigten Reihenfolge, insbesondere in der zu erwartenden benötigten Reihenfolge selbst zu speichern (Schritt 530).

Beispielsweise werden die Datenblöcke des ursprünglichen Speicherabbilds, welches die installierte Applikation aufweist, umsortiert. Zudem werden Abbildungsinformationen gespeichert, welche eine Abbildung von dem ursprünglichen Speicherabbild auf das umsortierte Speicherabbild ermöglichen.

Fig. 6 zeigt nun ein Ablaufdiagramm 6 eines Ausführungsbeispiels eines Verfahrens gemäß dem zweiten Aspekt. Das Verfahren kann beispielsweise ebenfalls von Server 200 durchgeführt werden.

Zunächst empfängt der Server 200 eine Anfrage zum Senden von zumindest einem Teil der zu der Ausführung der Applikation benötigten Datenblöcke (Schritt 610). Die Anfrage kann beispielsweise durch einen der Computer 250 über ein Netzwerk, etwa das Internet 240 erfolgen.

Sofern auf dem entsprechenden Computer 250 noch keine mit der Applikation assoziierten Metadateninformationen zum Ausführen der Applikation vorhanden sind, können zunächst diese gesendet werden (Schritt 620). Zusammen mit den Metadateninformationen oder separat hiervon werden zudem die gespeicherten Abbildungsinformationen, welche eine Abbildung von dem ursprünglichen Speicherabbild auf das umsortierte Speicherabbild ermöglichen, an den Computer 250 übermittelt. Anschließend werden die benötigten Datenblöcke an den entsprechenden Computer gesendet (Schritt 630). Beispielsweise wird das Speicherabbild mit den wie beschrieben umsortierten Datenblöcken der Applikation gesendet. Dabei sind die Datenblöcke auf dem Server 200 in einem Datenspeicher bereits in der Reihenfolge zumindest bereichsweise basierend auf der zu erwartenden benötigten Reihenfolge gespeichert, wie durch Schritt 530 ermöglicht. Bevorzugt werden die Datenblöcke dabei auch in der gespeicherten Reihenfolge gesendet.

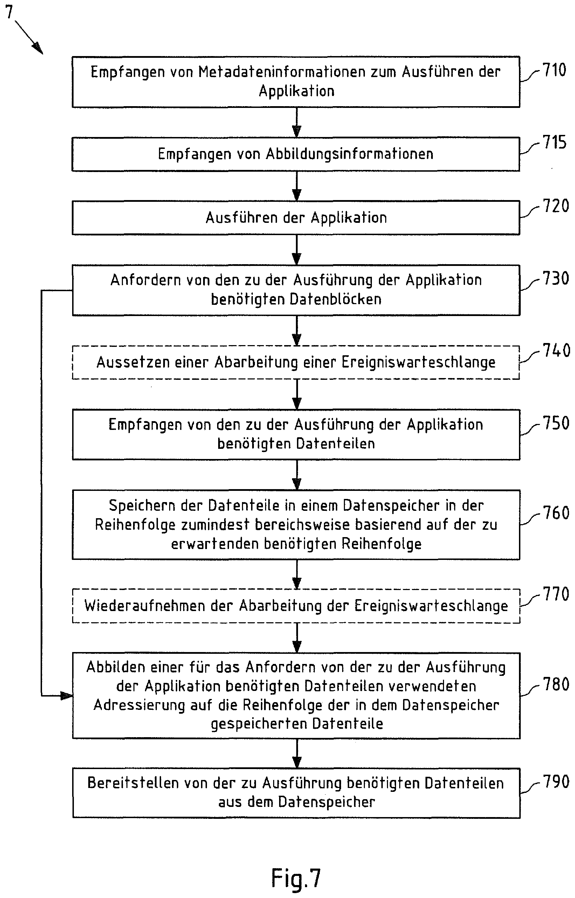

Fig. 7 zeigt ein Ablaufdiagramm 7 eines Ausführungsbeispiels eines Verfahrens gemäß dem ersten Aspekt. Das Verfahren kann beispielsweise jeweils durch die Computer 250 durchgeführt werden. Beispielsweise will ein Benutzer 260 eines Computers 250 die Applikation ausführen. Hierzu kann der entsprechende Computer 250 beispielsweise eine Anfrage über das Internet 240 an den Server 200 senden.

Auf dem entsprechenden Computer 250 ist bereits ein Blockgerätetreiber für ein virtuelles Blockgerät installiert. Hierdurch kann ein virtuelles Blockgerät in das Dateisystem des Betriebssystems des Computers 250 eingebunden werden. Das Installieren eines Blockgerätetreibers (etwa Treiber 421) und das Einbinden eines virtuellen Geräts wurden bereits in Zusammenhang mit Fig. 3 und 4 näher erläutert und kann hier analog erfolgen. Sofern noch nicht geschehen, kann der Computer 250 mit der Applikation assoziierten Metadateninformationen zum Ausführen der Applikation empfangen (Schritt 710), welche etwa gemäß Schritt 620 gesendet wurden. Ebenfalls empfängt Computer 250 mit den Metadateninformationen (oder separat hiervon) zudem die gespeicherten Abbildungsinformationen, welche eine Abbildung von dem ursprünglichen Speicherabbild auf das umsortierte Speicherabbild ermöglichen (Schritt 711).

Bevorzugt empfängt Computer 250 zudem Informationen (etwa die Größe) über einen für die Datenteile benötigten Speicherbereich.

Mithilfe dieser Informationen (etwa Pfadinformationen und Dateiinformationen) kann ein Einbinden eines Speicherabbilds mit der notwendigen Größe erfolgen und die Applikation kann (beispielsweise mittels einer ausführbaren Datei) ausgeführt werden (Schritt 720). Dies gilt selbst dann, wenn noch kein Datenblock der Applikation lokal im Datenspeicher des entsprechenden Computers 250 gespeichert ist, da bereits Informationen über eine ausführbare Datei vorliegen.

Die Applikation benötigt nun Datenblöcke zur ihrer Ausführung. Diese werden beispielsweise durch das Dateisystem (etwa Dateisystem 431) von dem Blockgerätetreiber (etwa Treiber 421) angefordert (Schritt 730).

Für den Fall, dass die benötigten Datenblöcke in dem Datenspeicher nicht zur Verfügung stehen, erfolgt ein Aussetzen der Abarbeitung der Ereigniswarteschlange ("Event-Queue") des Gerätetreibers (optionaler Schritt 740). Stehen die Datenblöcke bereits zur Verfügung, kann mit Schritt 780 (siehe unten) weiter verfahren werden. Erfolgt jedoch ein Aussetzen, können zu der Ausführung der Applikation benötigte Datenblöcke zunächst etwa von Server 200 empfangen werden (Schritt 750).

Die Datenblöcke werden in dem lokalen Datenspeicher (etwa einer Festplatte) des entsprechenden Computers 250 direkt in einer Reihenfolge zumindest bereichsweise basierend auf der zu erwartenden benötigten Reihenfolge gespeichert (Schritt 760), da diese so von Server 200 aufgrund des umsortierten Speicherabbilds übermittelt werden.

Sind die Datenblöcke lokal vorhanden kann die Abarbeitung der Ereigniswarteschlage des Gerätetreibers wieder aufgenommen werden (optionaler Schritt 770).

Da die angeforderten Datenblöcke aufgrund der geänderten Blockreihenfolge der Datenblöcke in dem empfangenen Speicherabbild geändert wurde, erfolgt durch den Gerätetreiber ein Abbilden ("Mapping") der für das Anfordern von den zu der Ausführung der Applikation benötigten Datenblöcken verwendeten Adressierung auf die Reihenfolge der in dem Datenspeicher gespeicherten Datenblöcke (Schritt 780). Dis ist möglich, da die zuvor von Server 200 gespeicherten Abbildungsinformationen, welche eine Abbildung von dem ursprünglichen Speicherabbild auf das umsortierte Speicherabbild ermöglichen, an den Computer 250 übermittelt wurden.

Somit können die zu der Ausführung der Applikation benötigten Datenblöcke aus dem Datenspeicher des Computers 250 durch den Blockgerätetreiber bereitgestellt werden. Dadurch, dass die Datenblöcke in dem Datenspeicher bereits in der Reihenfolge zumindest bereichsweise basierend auf der zu erwartenden benötigten Reihenfolge gespeichert sind (Schritt 790), kann das Bereitstellen sehr performant erfolgen. Insbesondere der Start der Applikation kann auf diese Weise beschleunigt werden, unabhängig davon, ob die Applikation erst noch von Server 200 heruntergeladen werden muss oder bereits auf Computer 250 gespeichert ist.

## Patentansprüche

1. Verfahren zum Ausführen einer interaktiven Applikation, bei der der Programmfluss durch den Benutzer beeinflusst wird, durchgeführt von mindestens einer Datenverarbeitungsanlage, das Verfahren umfassend:
- Bereitstellen (790) von zu der Ausführung der Applikation benötigten Datenteilen aus einem Datenspeicher, wobei die Datenteile in dem Datenspeicher in einer physischen Reihenfolge bereichsweise oder vollständig basierend auf einer zu erwartenden benötigten zeitlichen Reihenfolge gespeichert sind, sodass, wenn ein angeforderter Datenteil aus dem Datenspeicher gelesen wird, ein Vorausladen von Datenteilen erreicht wird, indem in einem Schritt auch physisch benachbarte Datenteilen gelesen werden, und wobei die zu erwartende benötigte zeitliche Reihenfolge auf einer Kombination von mehreren während des Ausführens der Applikation erfassten benötigten zeitlichen Reihenfolgen basiert.

2. Verfahren nach Anspruch 1,
wobei das Verfahren weiterhin umfasst:
- Anfordern (730) von den zu der Ausführung der Applikation benötigten Datenteilen, und
- Abbilden (780) einer für das Anfordern von den zu der Ausführung der Applikation benötigten Datenteilen verwendeten Adressierung auf die Reihenfolge der in dem Datenspeicher gespeicherten Datenteile, wobei das Abbilden der verwendeten Adressierung unterhalb der Schicht (430) des Dateisystems (431, 432) erfolgt.

3. Verfahren nach einem der Ansprüche 1 oder 2,
wobei das Verfahren weiterhin umfasst:
- Empfangen (750) von den zu der Ausführung der Applikation benötigten Datenteilen, und
- Speichern (760) der Datenteile in einem Datenspeicher in der Reihenfolge zumindest bereichsweise basierend auf der zu erwartenden benötigten Reihenfolge.

4. Verfahren nach Anspruch nach einem der Ansprüche 1 bis 3,
wobei die Datenteile Datenblöcke oder Sequenzen von Datenblöcken sind und wobei die Reihenfolge eine Blockreihenfolge ist, und
wobei die Datenteile auf einem Blockgerät, insbesondere einem virtuellen Blockgerät gespeichert sind, und
wobei zum Bereitstellen von den zu der Ausführung der Applikation benötigten Datenteilen aus dem Datenspeicher ein Blockgerätetreiber (421, 422), verwendet wird.

5. Verfahren nach einem der Ansprüche 1 bis 4,
wobei das Verfahren weiterhin umfasst:
- Aussetzen (740) einer Abarbeitung einer Ereigniswarteschlange, insbesondere falls die benötigten Datenteile in dem Datenspeicher nicht zur Verfügung stehen; und
- Wiederaufnehmen (770) der Abarbeitung der Ereigniswarteschlage.

6. Verfahren nach einem der Ansprüche 1 bis 5,
wobei die Datenteile in dem Datenspeicher zumindest in Bezug auf applikationsstartrelevante Datenteile in einer Reihenfolge zumindest bereichsweise basierend auf einer zu erwartenden benötigten Reihenfolge gespeichert sind.

7. Verfahren nach einem der Ansprüche 1 bis 6,
wobei das Verfahren weiterhin umfasst:
- Verwenden von mit der Applikation assoziierten Metadateninformationen zum Ausführen der Applikation.

8. Verfahren zum Senden von Datenteilen zur Verwendung in einem Verfahren nach einem der Ansprüche 1 bis 7, durchgeführt von mindestens einer Vorrichtung, das Verfahren umfassend:
- Senden (630) von zu einer Ausführung einer Applikation benötigten Datenteilen, wobei die Applikation eine interaktive Applikation ist, bei der der Programmfluss durch den Benutzer beeinflusst wird, wobei die Datenteile in einem Datenspeicher in einer physischen Reihenfolge zumindest bereichsweise basierend auf einer zu erwartenden benötigten zeitlichen Reihenfolge gespeichert sind, sodass, wenn ein angeforderter Datenteil aus dem Datenspeicher gelesen wird, ein Vorausladen von Datenteilen erreicht wird, indem in einem Schritt auch physisch benachbarte Datenteilen gelesen werden, wobei die zu erwartende benötigte zeitliche Reihenfolge auf einer Kombination von mehreren während des Ausführens der Applikation erfassten benötigten zeitlichen Reihenfolgen basiert.

9. Verfahren nach Anspruch 8,
wobei die Datenteile zumindest teilweise in der gespeicherten Reihenfolge gesendet werden.

10. Verfahren nach Anspruch 8 oder 9,
wobei das Verfahren weiterhin umfasst:
- Empfangen (610) einer Anfrage zum Senden von zumindest einem Teil der zu der Ausführung der Applikation benötigten Datenteile, und
- Senden (630) von mit der Applikation assoziierten Metadateninformationen zum Ausführen der Applikation.

11. Verfahren zum Speichern von Datenteilen zur Verwendung in einem Verfahren nach einem der Ansprüche 1 bis 7, durchgeführt von mindestens einer Datenverarbeitungsanlage, das Verfahren umfassend:
- Erhalten (510) mehrfach erfasster benötigter zeitlicher Reihenfolgen von zu der Ausführung einer Applikation benötigten Datenteilen, wobei die Applikation eine interaktive Applikation ist, bei der der Programmfluss durch den Benutzer beeinflusst wird, wobei die erfassten benötigten zeitlichen Reihenfolgen von den zu der Ausführung der Applikation benötigten Datenteilen protokollierte Informationen über Leseoperationen auf die benötigten Datenteile während des Ausführens der Applikation umfasst;
- Bestimmen (520) einer zu erwartenden benötigten zeitlichen Reihenfolge zumindest basierend auf den mehrfach erfassten benötigten zeitlichen Reihenfolgen; und
- Speichern (530) der benötigten Datenteile in einem Datenspeicher in einer physischen Reihenfolge zumindest bereichsweise basierend auf der zu erwartenden benötigten zeitlichen Reihenfolge, sodass, wenn ein angeforderter Datenteil aus dem Datenspeicher gelesen wird, ein Vorausladen von Datenteilen erreicht wird, indem in einem Schritt auch physisch benachbarte Datenteilen gelesen werden.

12. Verfahren nach Anspruch 11,
wobei das Verfahren weiterhin einen oder mehrere der folgenden Schritte umfasst:
- Installieren (310) eines Gerätetreibers, bevorzugt eines Blockgerätetreibers;
- Erstellen (320) eines Speicherabbildes;
- Einbinden (330) eines Geräts über einen Gerätetreiber, insbesondere über den installierten Gerätetreiber;
- Installieren (340) der Applikation, insbesondere auf dem erstellten Speicherabbild;
- Bestimmen (350) von mit der Applikation assoziierten Metadateninformationen zum Ausführen der Applikation;
- Ausführen (360) der Applikation;
- Erfassen (370) der benötigten Reihenfolge von zu der Ausführung einer Applikation benötigten Datenteilen.

13. Verfahren nach Anspruch 11 oder 12,
wobei die protokollierten Informationen eine eindeutige Identifikation des jeweiligen benötigten Datenteils ermöglichen, undwobei die protokollierten Informationen weiterhin eine oder mehrere der folgenden Informationen umfassen:
- Zeitinformationen;
- applikationsspezifische Ereignisse;
- benutzerspezifische Informationen.

14. Verfahren nach einem der Ansprüche 11 bis 13,
wobei im Fall eines sequentiellen Abschnitts einer erfassten benötigten Reihenfolge der sequentielle Abschnitt zusammengefasst wird.

15. Datenverarbeitungsanlage, welche dazu eingerichtet ist oder entsprechende Mittel umfasst, ein Verfahren nach einem der Ansprüche 1 bis 14 durchzuführen und/oder zu steuern.

16. Computerprogramm, das Programmanweisungen umfasst, die einen Prozessor zur Ausführung und/oder Steuerung eines Verfahrens gemäß einem der Ansprüche 1 bis 14 veranlassen, wenn das Computerprogramm auf dem Prozessor läuft.

## Claims

1. Method for executing an interactive application, in which the program flow is influenced by the user, which is performed by at least one data processing device, said method comprising:
- providing (790) data parts from a data memory, which are required for the execution of the application, the data parts being stored in the data memory in a physical order which is in some areas or completely based on an expected required chronological order, such that, when a requested data part is read from the data memory, a prefetching of the data parts is achieved by also reading physically neighbouring data parts in one step, and wherein the expected required chronological order is based on a combination of multiple required chronological orders acquired during the execution of the application.

2. Method according to claim 1,
wherein the method further comprises:
- requesting (730) of the data parts required for execution of the application, and
- mapping (780) an addressing used for the requesting of the data parts required for execution of the application to the order of the data parts stored in the data memory, wherein the mapping of the addressing used takes place below the file system (431, 432) layer (430).

3. Method according to any one of claims 1 or 2,
wherein the method further comprises:
- receiving (750) the data parts required for execution of the application, and
- storing (760) the data parts in a data memory in the order which is at least in some areas based on an expected required order.

4. Method according to claim according to any one of claims 1 - 3,
wherein the data parts are data blocks or sequences of data blocks and wherein the order is a block order, and
wherein the data parts are stored in a block device, in particular a virtual block device, und
wherein for the providing of the data parts required for execution of the application from the data memory a block device driver (421, 422) is used.

5. Method according to any one of claims 1 to 4,
wherein the method further comprises:
- suspending (740) a processing of an event queue, in particular if the required data parts are not available in the data memory; and
- resumption (770) of the processing of the event queue.

6. Method according to any one of claims 1 to 5,
wherein the data parts at least with respect to data parts relevant for the application start are stored in the data memory in an order which is at least in some areas based on an expected required order.

7. Method according to any one of claims 1 to 6,
wherein the method further comprises:
- using metadata information associated with the application to execute the application.

8. Method for sending data parts, for use in a method according to any one of claims 1 to 7, carried out by at least one device, the method comprising:
- sending (630) of data parts required for an execution of an application, in which the program flow is influenced by the user, wherein the data parts are stored in a data memory in a physical order which is at least in some areas based on an expected required chronological order, such that, when a requested data part is read from the data memory, a prefetching of the data parts is achieved by also reading physically neighbouring data parts in one step, wherein the expected required chronological order is based at least on multiple required chronological orders acquired during the execution of the application.

9. Method according to claim 8,
wherein the data parts are sent at least partly in the stored order.

10. Method according to either of claims 8 or 9,
wherein the method further comprises:
- receiving (610) a request to send at least some of the data parts required for execution of the application, and
- sending (630) of metadata information associated with the application for execution of the application.

11. Method for storing data parts for use in a method according to any of the claims 1 to 7, carried out by at least one data processing device, said method comprising:
- receiving (510) multiple acquired required chronological orders of the data parts required for executing an application, in which the program flow is influenced by the user, wherein the acquired required chronological order of the data parts required for execution of the application comprises logged information on read operations on the required data parts during the execution of the application;
- determining (520) an expected required chronological order at least based on the multiple times acquired required chronological orders; and
- storing (530) the required data parts in a data memory in a physical order which is at least in some areas based on the expected required chronological order, such that, when a requested data part is read from the data memory, a prefetching of the data parts is achieved by also reading physically neighbouring data parts in one step,.

12. Method according to claim 11,
wherein the method further comprises one or more of the following steps:
- installing (310) a device driver, preferably a block device driver;
- generating (320) an image;
- mounting (330) a device via a device driver, in particular via the installed device driver;
- installing (340) the application, in particular on the image generated;
- determining (350) metadata information associated with the application for the execution of the application;
- executing (360) the application;
- acquiring (370) the required order of the data parts required for the execution of an application.

13. Method according to claim 11 or 12,
wherein the logged information allows an unambiguous identification of the respective required data part, and
wherein the logged information also comprises one or more of the following information:
- time information;
- application-specific events;
- user-specific information.

14. Method according to any one of claims 11 to 13,
wherein in the event of a sequential section of an acquired required order the sequential section is condensed.

15. Data processing device configured to, or comprising, suitable means for, carrying out and/or controlling a method according to any one of claims 1 to 14.

16. Computer program, comprising program instructions, allowing a processor to carry out and/or control a method according to any one of claims 1 to 14 if the computer program runs on the processor.

## Revendications

1. Procédé d'exécution d'une application interactive dans laquelle le déroulement du programme est influencé par l'utilisateur, réalisé par au moins un système de traitement de données, le procédé comprenant :
- fournir (790) des parties de données requises pour l'exécution de l'application à partir d'une mémoire de données, dans lequel les parties de données sont stockées dans la mémoire de données dans un ordre physique basé par zones ou complètement sur un ordre temporel requis attendu, de sorte que lorsqu'une partie de données demandée est lue à partir de la mémoire de données, un préchargement de parties de données est réalisé en lisant également des parties de données physiquement adjacentes en une étape, et dans lequel l'ordre temporel requis attendu est basé sur une combinaison de plusieurs ordres temporels requis détectés pendant l'exécution de l'application.

2. Procédé selon la revendication 1,
le procédé comprenant en outre :
- demander (730) les parties de données requises pour l'exécution de l'application, et
- mapper (780) un adressage utilisé pour demander les parties de données requises pour l'exécution de l'application à l'ordre des parties de données stockées dans la mémoire de données, dans lequel le mappage de l'adressage utilisé est effectué en dessous de la couche (430) du système de fichiers (431, 432).

3. Procédé selon l'une des revendications 1 ou 2,
le procédé comprenant en outre :
- recevoir (750) les parties de données requises pour l'exécution de l'application, et
- stocker (760) les parties de données dans une mémoire de données dans l'ordre basé au moins par zones sur l'ordre requis attendu.

4. Procédé selon l'une quelconque des revendications 1 à 3,
dans lequel les parties de données sont des blocs de données ou des séquences de blocs de données et
dans lequel l'ordre est un ordre de bloc, et
dans lequel les parties de données sont stockées sur un dispositif de bloc, en particulier un dispositif de bloc virtuel, et
dans lequel un pilote de dispositif de bloc (421, 422) est utilisé pour fournir les parties de données requises pour l'exécution de l'application à partir de la mémoire de données.

5. Procédé selon l'une quelconque des revendications 1 à 4,
le procédé comprenant en outre :
- suspendre (740) un traitement d'une file d'attente d'événements, en particulier si les parties de données requises ne sont pas disponibles dans la mémoire de données ; et
- reprendre (770) le traitement de la file d'attente des événements.

6. Procédé selon l'une quelconque des revendications 1 à 5,
dans lequel les parties de données sont stockées dans la mémoire de données au moins en ce qui concerne des parties de données pertinentes pour le démarrage de l'application dans un ordre au moins par zone basé sur un ordre requis attendu.

7. Procédé selon l'une quelconque des revendications 1 à 6,
le procédé comprenant en outre :
- utiliser des informations de métadonnées associées à l'application pour exécuter l'application.

8. Procédé de transmission de parties de données destinées à être utilisées dans un procédé selon l'une quelconque des revendications 1 à 7, réalisé par au moins un appareil, le procédé comprenant :
- transmettre (630) des parties de données requises pour une exécution d'une application, l'application étant une application interactive dans laquelle le déroulement du programme est influencé par l'utilisateur, dans lequel les parties de données sont stockées dans une mémoire de données dans un ordre physique basé au moins par zone sur un ordre temporel requis attendu, de sorte que lorsqu'une partie de données demandée est lue à partir de la mémoire de données, un préchargement de parties de données est réalisé en lisant également des parties de données physiquement adjacentes en une étape, dans lequel l'ordre temporel requis attendu est basé sur une combinaison de plusieurs ordres temporels requis détectés pendant l'exécution de l'application.

9. Procédé selon la revendication 8,
dans lequel les parties de données sont transmis au moins partiellement dans l'ordre mémorisé.

10. Procédé selon la revendication 8 ou 9,
le procédé comprenant en outre :
- recevoir (610) une demande de transmission d'au moins une partie des parties de données requises pour l'exécution de l'application, et
- transmettre (630) des informations de métadonnées associées à l'application pour exécuter l'application.

11. Procédé de stockage de parties de données destinées à être utilisées dans un procédé selon l'une quelconque des revendications 1 à 7, réalisé par au moins un système de traitement de données, le procédé comprenant :
- obtenir (510) des ordres temporelles requises détectées multiplement de parties de données requises pour l'exécution d'une application, dans laquelle l'application est une application interactive dans laquelle le déroulement du programme est influencé par l'utilisateur, dans laquelle les ordres temporelles requises détectées des parties de données requises pour l'exécution de l'application comprennent des informations enregistrées concernant des opérations de lecture sur les parties de données requises pendant l'exécution de l'application ;
- déterminer (520) un ordre temporel requis attendu au moins sur la base des ordres temporels requis détectés multiplement ; et
- stocker (530) les parties de données requises dans une mémoire de données dans un ordre physique basé au moins par zone sur l'ordre temporel requis attendu, de sorte que lorsqu'une partie de données demandée est lue à partir de la mémoire de données, le préchargement de parties de données est réalisé en lisant également des parties de données physiquement adjacentes en une étape.

12. Procédé selon la revendication 11,
le procédé comprenant en outre une ou plusieurs des étapes suivantes :
- installer (310) un pilote de dispositif, de préférence un pilote de dispositif de bloc ;
- créer (320) une image mémoire ;
- inclure (330) un dispositif via un pilote de dispositif, en particulier via le pilote de dispositif installé ;
- installer (340) l'application, en particulier sur l'image mémoire créée ;
- déterminer (350) des informations de métadonnées associées à l'application pour exécuter l'application ;
- exécuter (360) l'application ;
- capturer (370) l'ordre requise de parties de données requises pour l'exécution d'une application.

13. Procédé selon la revendication 11 ou 12,
dans lequel les informations enregistrées permettent une identification unique de la partie de données requis respectivement, et dans lequel les informations enregistrées comprennent en outre une ou plusieurs des informations suivantes :
- des informations de temps ;
- des événements spécifiques à l'application ;
- des informations spécifiques à l'utilisateur.

14. Procédé selon l'une quelconque des revendications 11 à 13,
dans lequel, dans le cas d'une section séquentielle d'un ordre requis détecté, la section séquentielle est agrégée.

15. Système de traitement de données qui est configuré ou comprend des moyens correspondants pour réaliser et/ou contrôler un procédé selon l'une quelconque des revendications 1 à 14.

16. Programme informatique comprenant des instructions de programme qui amènent un processeur à exécuter et/ou contrôler un procédé selon l'une quelconque des revendications 1 à 14 lorsque le programme informatique est exécuté sur le processeur.
